# EUROPÄISCHE PATENTSCHRIFT

(11) **EP 2 896 898 B1**
(45) Veröffentlichungstag und Bekanntmachung des Hinweises auf die Patenterteilung: **09.09.2020**
(21) Anmeldenummer: 15151386.8
(22) Anmeldetag: 16.01.2015
(51) Int. Cl.: F24S 60/10, E04C 2/52, F28D 20/02, F24S 20/66, F24F 5/00

(54) **Fassadenelement mit Latentwärmespeicher, Latentwärmespeichermodul und Verfahren zum Klimatisieren eines Gebäudes.**
Façade element with latent heat storage device, modular latent heat storage device and method of air conditioning a building
Élément de façade avec accumulateur de chaleur latente, module d'accumulatuer de chaleur latente et procédé de climatisation d'un immeuble

(30) Priorität: 16.01.2014 DE 102014100448
(43) Veröffentlichungstag der Anmeldung: 22.07.2015
(73) Patentinhaber: Falkeis, Anton, 1190 Wien (AT)
(72) Erfinder: Falkeis, Anton, Univ.-Prof. Arch., 1190 Wien (AT); Fischer, Ludger, Dr., 6300 Zug (CH); Menti, Urs-Peter, Prof., 8832 Wollerau (CH); Plüss, Iwan, 4663 Aarburg (CH); Vetterli, Nadège, 6060 Sarnen (CH); Nigg, Adolf, 9490 Vaduz (LI); Worlitschek, Jörg, Dr., 6006 Luzern (CH)
(74) Vertreter: Molnia, David

(56) Entgegenhaltungen:
- EP-A1- 1 541 797
- WO-A1-2006/028366
- DE-A1-102006 020 535
- DE-A1-102007 047 693
- DE-U1- 29 819 352
- US-A- 4 162 671
- US-A- 4 212 289
- US-A- 4 337 754
- US-A- 4 495 937

## Beschreibung

Die Erfindung bezieht sich auf ein Fassadenelement zum Klimatisieren eines Gebäudes mit Latentwärmespeichermodulen und auf ein Verfahren zum Klimatisieren eines Gebäudes unter Verwendung eines solchen Fassadenelements.

Dabei wird unter Klimatisieren nachfolgend sowohl das Heizen als auch das Kühlen eines Gebäudes bezeichnet, vorzugsweise durch Erwärmen bzw. Abkühlen der Raumluft oder der den Räumen des Gebäudes zugeführten Luft.

Saisonale und tageszeitliche Schwankungen von Außentemperaturen und Sonneneinstrahlung führen zu Temperaturschwankungen in Gebäuden.

Die Gebäudehülle (Dach, Wände, Böden) dient dazu diese Schwankungen zu reduzieren. Zum einen durch eine eigentliche Trennung von außen und innen. Zum anderen durch seine thermische Masse, mit der Wärme und Kälte gespeichert werden kann und ein Temperaturausgleich in Grenzen erzielt wird.

Durch moderne Baumaterialien und verstärkte Wärmedämmung lassen sich Wärmeverluste reduzieren. Der flächenspezifische Bedarf an Heizenergie ist in den letzten Jahrzehnten stetig gesunken.

Gebäude werden heute mit grossen Fensterflächen versehen, um den Bewohnern oder Benutzern ein positives Empfinden zu vermitteln. Die beim Bau verwendeten Materialien in der Gebäudehülle sind auf Wärmedämmung ausgerichtet und entsprechend leicht (kleine thermische Speicherkapazität).

Für Perioden mit starker Sonneneinstrahlung führt dies nunmehr zu dem Problem, dass sich die Gebäude im Innern zu stark aufheizen.

Durch die grossen Fensterflächen wird mehr passive Sonneneinstrahlung aufgenommen als früher. Durch die Leichtbauweise ist weniger thermische Masse im Gebäude vorhanden.

In der Folge tritt in vielen Gebäuden das Problem auf, dass bei schönem Wetter (mit starker Sonnenstrahlung) die Temperaturspitzen am Tage deutlich ausserhalb des Komfortbereichs liegen. Die aktive Kühlung der Gebäude ist teuer und häufig nicht möglich. Ausserdem widerspricht dies dem Wunsch nach Gebäuden mit niedrigem Energieverbrauch.

Um diesen Effekt zu reduzieren werden Anstrengungen unternommen die thermische Masse im Gebäude zu erhöhen.

Daneben verbleibt das bekannte Problem der Wärmeverluste des Gebäudes an die Umgebung bei kühlen Temperaturen; insbesondere im Winter und in den Übergangsperioden sowie in der Nacht.

Zur Erhöhung der thermischen Masse geeignet sind sogenannte Latentwärmespeichermaterialien, insbesondere Phasenwechselmaterialien, auch Phase Change Materials (PCM) genannt. Dabei wird der Effekt ausgenutzt, dass ein Stoff beim Wechsel eines Aggregatszustandes, z.B. Phasenwechsel von fest zu flüssig, eine große Wärmemenge aufnimmt, ohne dabei die Temperatur zu verändern. Diese "latente Wärme" ist relativ groß im Vergleich zur "sensiblen Wärme" durch Temperaturerhöhung
Die Temperatur, bei der der Phasenwechsel abläuft ist materialspezifisch. Er ist z.B. bei Wasser-Eis 0°C, bei vielen Paraffinen liegt sie je nach Molekulargewicht zwischen zum Beispiel 10°C und 80°C.

Es gibt im Weiteren viele organische und anorganische Materialien, bei denen der Wechsel des Aggregatszustandes im Temperaturbereich 15°C bis 40 °C stattfindet.

Ferner ist bekannt, dass PCM in diesem Bereich verwendet werden, um die Raumtemperatur zu beeinflussen. Dabei werden PCM in Decken und Wänden eingebaut. Auch im Bodenbereich werden PCM Materialien eingesetzt. Dabei werden z.B. unterhalb des Bodens PCM Elemente angeordnet und mit gerichteter Überströmung durch Raumluft Wärme aufgenommen, resp. abgegeben.

Die Wirkung ergibt sich dadurch, dass bei Überschreiten der Raumtemperatur das PCM zu schmelzen beginnt, dabei Wärme aufnimmt und ein weiteres Ansteigen der Raumtemperatur verhindert. Umgekehrt gefriert das PCM bei Unterschreiten einer gewissen Raumtemperatur und gibt dann dabei Wärme ab. Die Wirkung der PCM ist ausgerichtet auf einen täglichen Zyklus. Überschüssige Wärme am Tag wird nachts abgeführt. Die ideale Phasenwechseltemperatur ergibt sich aus der Anwendung und aus dem Komfortbedarf der Bewohner. Der Komfortbedarf kann dabei regional unterschiedlich sein.

All diese Massnahmen dienen zur Temperaturnivellierung in den Räumen durch die passiv wirkenden PCM im Gegensatz zur aktiven Temperaturanpassung durch Heizen und Kühlen. In der Literatur hat sich eingebürgert Bauelemente, die eine Wirkung auf die Raumtemperatur haben als "thermisch aktive Bauelemente" zu bezeichnen, auch wenn sie im eigentlichen technischen Sinn lediglich passiv wirken.

Siehe dazu auch die ausführliche und umfassende Abhandlung in Mehling, Cabezza: Heat and cold storage with PCM, An up to date introduction into basics and applications, ISBN-13: 978-3540685562
Die Verwendung von PCM Materialien innerhalb der Gebäudehülle (z.B. eingekapselt in Gipskartonplatten) ist nicht unproblematisch. Wenn z.B. das PCM im warmen und damit flüssigen Zustand nicht gekapselt bleibt, kann dieses austreten (Bluten).

Die latente Schmelzwärme stellt eine große Energiemenge dar, die absorbiert oder freigesetzt werden muss, wenn ein Material seine Phase vom festen Zustand zum flüssigen Zustand oder umgekehrt wechselt. Das Ausmaß der betroffenen Energiemenge kann durch einen Vergleich der sensiblen Wärmespeicherkapazität von Beton (1,0 kJ/kg K) mit der latenten Wärme eines Phasenwechselmaterials (PCM) wie zum Beispiel Calciumchlorid Hexahydrat CaCI2 6H2O (bis zu 180 kJ/kg) verdeutlicht werden. Dies hat den Vorteil, dass ein Energiespeichersystem, welches Phasenwechselmaterialien enthält, im Vergleich zu sensiblen Wärmespeichern mit einem deutlich geringeren Volumen auskommt. Ein weiterer Vorteil von Phasenwechselmaterialien liegt darin, dass sich die Wärmespeicherung beziehungsweise die Wärmeabgabe für gewöhnlich in einem sehr engen Temperaturspektrum vollzieht.

Für Gebäude kommen in der Regel Phasenwechselmaterialien zum Einsatz, welche ihren Phasenwechsel im Bereich der Raumtemperatur vollziehen. Idealerweise beginnt dabei beim Überschreiten der Raumtemperatur das Phasenwechselmaterial zu schmelzen. Dabei nimmt das Phasenwechselmaterial Wärme auf, ohne dass es zu einem weiteren Anstieg der Raumtemperatur kommt. Bei einem Unterschreiten der Raumtemperatur hingegen, verfestigt sich das Phasenwechselmaterial und gibt dabei Wärme ab, so dass einem weiteren Absinken der Raumtemperatur entgegengewirkt werden kann.

Anschaulich gesprochen wird tagsüber überschüssige Wärme im Phasenwechselmaterial gespeichert und nachts abgegeben.

In CN000102409788A wird die Verwendung von PCM Materialien in Betondecken und -böden beschrieben, wobei die PCM Materialien während des Gießens der Betonschicht zugegeben werden.

In US020090223160A1 wird beschrieben, wie sich PCM u.a. in Fliesen und Platten homogen einbinden lässt.

In CN000201074373Y wird die auch an anderer Stelle vorgeschlagene Methode beschrieben, den Boden anzuheben, um unterhalb des Bodens, also nicht im Boden integriert, eigene PCM Elemente anzubringen, so dass hiermit eine temperaturnivellierende Wirkung entsteht.

In DE102007010923A1 werden Wand-, Decken- und Bodenelemente beschrieben, bei denen diese durch geeignete Ausführung durchströmt werden. In einer Ausführungsform sind in diesen Elementen PCM eingebaut. Der Effekt der Wärmeübertragung findet durch erzwungene Konvektion statt.

Nachteilig an den bisher umsetzten Lösungen ist:
- Das PCM gibt Wärme (in der Regel nachts) an das Gebäudeinnere ab.
- Passive Elemente können nicht zum Heizen, folglich zur Reduktion des Energieverbrauchs im Winter oder der Übergangszeit genutzt werden.
- Die PCM nehmen die Wärme immer aus dem Gebäudeinneren auf und können damit lediglich eine nivellierende Wirkung entfalten. Ein Beheizen oder aktives Kühlen ist nicht möglich.

Im Vergleich dazu kann mit Sonnenkollektoren, resp. solarthermischen Anlagen, Umgebungswärme aufgenommen werden und in das Gebäudeinnere geleitet werden.

Ebenfalls bekannt sind thermisch aktive Bauteile (sogenannte tabs). In einer bekannten Ausführungsform sind z.B. Betondecken mit Wärmeübertragerrohren durchzogen. Es kann aktiv im Vergleich zur Raumtemperatur warme oder kalte Flüssigkeit durch die Wärmeübertragerrohre geleitet werden. Durch die grossen Oberflächen werden damit die Räume gekühlt oder geheizt. Ein Sonderfall stellt die hinlänglich bekannte Bodenheizung dar. Diese Einrichtung kann beispielsweise im Sommer auch zum Kühlen der Gebäude benutzt werden.

Aus der EP 1 541 797 A1 sind eine Sonnenlamelle und ein Verfahren mit einem Sonnenstore bekannt, welche die Sonneneinstrahlung durch ein Fenster und den Wärmehaushalt eines dahinter liegenden Raumes passiv regeln.

Ebenfalls wird in der DE 10 2006 020 535 A1 eine Vorrichtung zum Aufnehmen und Speichern von Sonnenenergie gezeigt, welche mit einer Fassade fest verbunden ist und ein PCM-Material und eine dahinter angeordnete Fluidleitung aufweist.

Ein Latentwärmespeicher mit einer fluidführenden Leitung, welche durch einen offenporigen, mäanderförmigen Latentwärmespeicher verläuft, ist aus der DE 10 2007 047 693 A1 bekannt.

Die US 4,162,671 offenbart ein transparentes Solarmodul, welches ein aus paraffinischen Kohlenwasserstoffen bestehendes Latentwärmespeichermaterial aufweist und zum Heizen von Wasser ausgerichtet ist.

Die DE 298 19 352 U1 offenbart eine Vorrichtung zum Temperieren der Innenräume von Gebäuden, bestehend aus einem Heizkörper, der mit einem Speicherkollektor über Rohrleitungen verbunden ist und an den Wandflächen der Gebäude angeordnet, deren Innenraumtemperatur beeinflusst.

Aus der US 4,212,289 sind drehbare Fensterläden bekannt, welche ein Phasenwechselmaterial aufweisen.

Es ist eine Aufgabe der vorliegenden Erfindung, die im Stand der Technik auftretenden Probleme zu beheben und die effiziente und ressourcenschonende Klimatisierung von Gebäuden weiter zu verbessern. Diese Aufgabe wird gelöst durch ein erfindungsgemäßes Fassadenelement mit den Merkmalen von Anspruch 1 und ein erfindungsgemäßes Verfahren zum Klimatisieren eines Gebäudes mit den Merkmalen von Anspruch 18. Bevorzugte Ausführungsformen werden durch die abhängigen Ansprüche angegeben.

Ein erfindungsgemäßes Fassadenelement zum Klimatisieren eines Gebäudes weist einen Trägerrahmen, eine Mehrzahl von mit dem Trägerrahmen verbundenen Latentwärmespeichermodulen, die mindestens ein Latentwärmespeichermaterial enthalten, und eine Leitungsanordnung für ein Arbeitsmedium auf. Die Leitungsanordnung ist so gestaltet, dass das Arbeitsmedium die Latentwärmespeichermodule umströmen und/oder durchströmen kann.

Erfindungsgemäß umfasst die Leitungsanordnung einen Einlass und einen Auslass für das Arbeitsmedium, sodass das Arbeitsmedium z.B. vom Gebäude aus in die Leitungsanordnung und nach dem Durchströmen des Fassadenelements wieder zurück zum Gebäude geführt werden kann.

Der Trägerrahmen ist vorzugsweise auf einer Seite mit einem oder mehreren Befestigungselementen für die Latentwärmespeichermodule versehen. Insbesondere kann der Trägerrahmen auf einer Seite mit einer durchgehenden Abdeckung versehen sein, an der die Latentwärmespeichermodule befestigt werden können.

Erfindungsgemäße Fassadenelemente können zum Heizen oder auch zum Kühlen des Gebäudes verwendet werden. Auch die Kombination beider Anwendungen ist vorgesehen.

Wird ein Fassadenelement zum Heizen verwendet, so kann tagsüber Wärme durch Sonneneinstrahlung aufgenommen und im Latentwärmespeichermaterial gespeichert werden. Nachts und/oder bei Heizbedarf wird ein Arbeitsmedium (beispielsweise eine Flüssigkeit (z.B. Wasser, Wasser-Glykolmischungen, Öle, Glycerin oder eine Kombination daraus) oder Gas (Luft, Helium, Stickstoff, CO2 oder eine Kombination daraus)) durch die Fassadenelemente geleitet, wobei es die Latentwärmespeichermodule umströmt oder durchströmt. Dabei wird dem Latentwärmespeichermaterial in den Latentwärmespeichermodulen die gespeicherte Wärme wieder entnommen und zum Heizen des Gebäudes genutzt. Vorzugsweise wird als Arbeitsmedium Luft verwendet, die dann, nachdem sie in den Fassadenelementen erwärmt wurde, direkt dem Gebäude zugeführt wird.

Wird ein Fassadenelement zum Kühlen des Gebäudes verwendet, so kann Wärme aus dem Gebäude über das Arbeitsmedium (wiederum bevorzugt Luft, die direkt aus den zu kühlenden Räumen entnommen wird) an die Latentwärmespeichermodule abgegeben und somit im Latentwärmespeichermaterial gespeichert werden. Nachts und/oder bei ausreichend kühler Außentemperatur wird dann die Wärme von den Latentwärmespeichermodulen durch Konvektion und/oder Strahlung an die Außenluft bzw. in das Weltall abgegeben.

Erfindungsgemäß weist das Fassadenelement weiterhin ein oder mehrere Befestigungsmittel zur Befestigung des Fassadenelements an einem Gebäude auf, die vorzugsweise eine fassadenintegrierte und/oder eine von der Fassade abstehende Befestigung des Fassadenelements am Gebäude erlauben. Die Befestigungsmittel lassen eine bewegliche Befestigung des Fassadenelements am Gebäude : zu. Erfindungsgemäß ässt sich das Fassadenelement drehbar am Gebäude befestigen, so dass es vom Gebäude weggeklappt bzw. an das Gebäude angeklappt werden kann. Dadurch ist es möglich, ein zum Heizen vorgesehenes Fassadenelement beispielsweise tagsüber vom Gebäude weg zu klappen, um möglichst viel Sonnenstrahlung aufzunehmen. Nachts kann das Fassadenelement dann wieder an das Gebäude angeklappt werden, um die Wärmeverluste sowohl des Fassadenelements als auch des Gebäudes zu verringern. Ein zum Kühlen vorgesehenes Fassadenelement hingegen könnte beispielsweise nachts vom Gebäude weggeklappt werden, um die Wärmeabgabe zu verbessern, wohingegen es tagsüber an das Gebäude angeklappt werden kann.

In einer weiteren bevorzugten Ausführungsform ist vorgesehen, dass das Fassadenelement so am Gebäude befestigt wird, dass die Drehachse nicht senkrecht steht, sondern um einen bestimmten Winkel geneigt ist. Dann steht auch das ausgeklappte Fassadenelement nicht senkrecht, sondern ist ebenfalls geneigt angeordnet. Dadurch kann die Sonneneinstrahlung insbesondere bei hoch stehender Sonne besser aufgenommen werden. Bevorzugterweise ist der Winkel, um den die Drehachse von der Senkrechten abweicht zwischen ungefähr 15° und ungefähr 20°, besonders bevorzugt ungefähr 18°.

In einer weiteren bevorzugten Ausführungsform weist ein erfindungsgemäßes Fassadenelement ein Wärmedämmmaterial auf, das entlang mindestens einer Oberfläche des Fassadenelements angeordnet ist. Diese Oberfläche kann beispielsweise die Abdeckung sein, an der die Latentwärmespeichermodule befestigt sind. Insbesondere im Fall von beweglichen Fassadenelementen ist das Wärmedämmmaterial entlang der/den Oberfläche(n) angeordnet, die "außen" liegen, wenn das Fassadenelement an das Gebäude angeklappt ist. Hierdurch kann die Wärmeisolation des Gebäudes verbessert werden und auch eine unerwünschte Wärmeabgabe aus dem Latentwärmespeichermaterial an die Außenluft verringert werden.

In einer weiteren bevorzugten Ausführungsform weist das Fassadenelement eine für sichtbares Licht und/oder für Infrarotstrahlung transparente Abdeckung, vorzugsweise aus Glas, auf. Eine solche Abdeckung kann beispielsweise auf der der oben genannten Abdeckung, an der die Latentwärmespeichermodule befestigt sind, gegenüberliegenden Seite angeordnet sein. Dadurch entsteht ein abgeschlossenes Volumen, in dem die Latentwärmespeichermodule angeordnet sind. Die transparente Abdeckung lässt die Sonnenstrahlung im Wesentlichen ungehindert zu den Latentwärmespeichermodulen durch. Sie reduziert aber die Wärmeverluste aus den Latentwärmespeichermodulen durch Konvektion, da die Latentwärmespeichermodule nicht mehr direkt mit der Außenluft in Kontakt stehen.

Vorzugsweise ist die transparente Abdeckung mit dem Trägerrahmen im Wesentlichen dicht für das Arbeitsmedium, das heißt im Falle von Luft luftdicht, verbunden, sodass das abgeschlossene Volumen im Wesentlichen dicht für das Arbeitsmedium ist. Dies hat neben der noch weiter verbesserten Verringerung der Wärmeabgabe den zusätzlichen Vorteil zur Folge, dass das Arbeitsmedium im Inneren des Fassadenelements unmittelbar an den Latentwärmespeichermodulen entlang geführt werden kann. Hierdurch werden die Latentwärmespeichermodule vom Arbeitsmedium umströmt, welches somit gut die Wärme, die im Latentwärmespeichermaterial gespeichert ist, aufnehmen kann. Durch die Anordnung der Latentwärmespeichermodule im Inneren des geschlossenen Fassadenelements wird somit eine Leitungsanordnung für das Arbeitsmedium definiert.

Vorzugsweise sind auch die Latentwärmespeichermodule gegen die transparente Abdeckung im Wesentlichen dicht für das Arbeitsmedium (luftdicht) abgedichtet. Hierzu können die Latentwärmespeichermodule mit Dichtungselementen wie beispielsweise einer oder mehreren Gummilippen versehen sein, die mit der transparenten Abdeckung in Kontakt stehen. Dadurch lässt sich die durch die Latentwärmespeichermodule definierte Leitungsanordnung noch besser definieren. Vorzugsweise wird mindestens eine durchgängige Verbindung für das Arbeitsmedium vom Einlass zum Auslass gebildet.

Alternativ oder zusätzlich zu einer solchen Leitungsanordnung, die durch die Anordnung der Latentwärmespeichermodule im Trägerrahmen definiert wird, können selbstverständlich auch dedizierte Leitungen für das Arbeitsmedium verwendet werden. Diese Leitungen können mit den Latentwärmespeichermodulen verbunden sein oder auch bevorzugterweise zumindest teilweise innerhalb der Latentwärmespeichermodule verlaufen.

Der Trägerrahmen des erfindungsgemäßen Fassadenelements besteht vorzugsweise aus Metall (insbesondere Stahl und/oder Aluminium), Beton, Holz, Polymermaterial, Polymerverbundmaterial oder aus einer Kombination dieser Materialien.

Als Latentwärmespeichermaterial kann in den Latentwärmespeichermodulen der erfindungsgemäßen Fassadenelemente ein Phasenübergangsmaterial (PCM) zum Einsatz kommen.

Wenn das erfindungsgemäße Fassadenelement zum Heizen genutzt werden soll, liegt die Phasenübergangstemperatur oberhalb der gewünschten Raumtemperatur. Vorzugsweise liegt die Phasenübergangstemperatur im Bereich zwischen ungefähr 28°C und ungefähr 35°C, bevorzugt bei ungefähr 32°C. Wenn das erfindungsgemäße Fassadenelement zum Kühlen genutzt werden soll, liegt die Phasenübergangstemperatur unterhalb der gewünschten Raumtemperatur. Vorzugsweise liegt die Phasenübergangstemperatur im Bereich zwischen ungefähr 18°C und ungefähr 25°C, bevorzugt bei ungefähr 21°C.

Ein Latentwärmespeichermodul, das in einem erfindungsgemäßen Fassadenelement zum Klimatisieren eines Gebäudes zum Einsatz kommen kann, weist bevorzugt ein geschlossenes Gehäuse auf, das eine Oberseite und eine Unterseite hat. Das Gehäuse ist zumindest teilweise mit einem Latentwärmespeichermaterial gefüllt. Das Modul weist weiterhin Befestigungselemente zur Befestigung des Moduls an einem zugehörigen Trägerelement des Fassadenelements auf. Erfindungsgemäß ist das Gehäuse ein Profilelement (d.h. ein Element mit einem über den Großteil seiner Länge im Wesentlichen gleichbleibendem Querschnitt) aus Metall, insbesondere Aluminium, Kupfer und/oder Stahl, aus Kunststoff, insbesondere Polypropylen, Polyethylen und/oder Polyvinylchlorid, aus Glas oder aus einer Kombination aus diesen Materialien.

Das Trägerelement des Fassadenelements kann beispielsweise die weiter oben genannte (nicht transparente) Abdeckung des Fassadenelements sein, an der das Latentwärmespeichermodul beispielsweise mittels Schrauben und/oder Klemmen befestigt werden kann.

Mehrere solcher Latentwärmespeichermodule können in einem erfindungsgemäßen Fassadenelement, wie es oben ausführlich beschrieben wurde, verwendet werden.

In einer bevorzugten Ausführungsform schließen die Oberseite und die Unterseite des Gehäuses im Wesentlichen einen Winkel ein. Dies bedeutet, dass eine durch die Oberseite des Gehäuses definierte Ebene und eine durch die Unterseite des Gehäuses definierte Ebene einen Winkel einschließen. Dies ermöglicht, dass die Sonnenstrahlung besser in den Zwischenraum zwischen zwei Latentwärmespeichermodulen eindringen kann, damit die Module gleichmäßiger erwärmt werden. Bevorzugterweise liegt der Winkel zwischen der Oberseite und der Unterseite des Gehäuses zwischen ungefähr 15° und ungefähr 50°, besonders bevorzugt bei ungefähr 20°. Insbesondere wenn das Latentwärmespeichermodul in einem Fassadenelement, das geneigt an einem Gebäude angebracht wird (siehe oben), zum Einsatz kommt, ist der Winkel und/oder die Ausrichtung der Module im Fassadenelement bevorzugt so an die Neigung angepasst, dass die Sonnenstrahlung auch bei tief stehender Sonne in die Zwischenräume zwischen zwei Modulen eindringen kann.

Die bevorzugte Ausrichtung der Gehäuse geht von einer horizontalen Anordnung aus. Abhängig von den klimatischen Bedingungen, den örtlichen Gegebenheiten (z.B. Schattenwurf von Gebäuden, Bergen, usw.), können die Gehäuse auch in einem anderen Winkel (z.B. senkrecht) angeordnet werden.

Dabei ist auch vorgesehen, dass die Oberseite und die Unterseite des Gehäuses selbst nicht eben sein müssen, sondern auch eine von einer Ebene abweichenden Form aufweisen können. Beispielsweise kann die Oberseite und/oder die Unterseite des Gehäuses gebogen, gewellt und/oder gefaltet sein. Eine solche von einer Ebene abweichende Form der Oberseite bzw. der Unterseite des Gehäuses dient unter anderem der Versteifung des Gehäuses und einer Vergrößerung der Oberfläche des Gehäuses. Außerdem kann dadurch die Form des Gehäuses für eine möglichst gute Aufnahme der Sonnenstrahlung weiter optimiert werden.

Zur Versteifung des Gehäuses können in einer weiteren bevorzugten Ausführungsform auch Versteifungselemente zum Einsatz kommen. Solche Versteifungselemente können beispielsweise längliche Stege sein, die im Inneren und/oder außen am Gehäuse angeordnet sein können.

In einer weiteren bevorzugten Ausführungsform weist jedes _atentwärmespeichermodul mindestens eine Leitung für ein Arbeitsmedium auf. Die Leitung kann außen am Gehäuse entlang geführt werden. Bevorzugt ist, dass die Leitung im Inneren des Gehäuses verläuft. Hierdurch kann der Wärmeaustausch zwischen Arbeitsmedium und Latentwärmespeichermaterial optimiert werden. Weiter vorzugsweise sind die Leitungen für das Arbeitsmedium im Inneren des Gehäuses mit dem Gehäuse verbunden, beispielsweise über starre Verbindungselemente. Hierdurch kann sichergestellt werden, dass sich die Leitungen im Inneren des Gehäuses stets in einer optimalen Position für den Wärmeaustausch zwischen Arbeitsmedium und Latentwärmespeichermaterial befinden.

Die Leitung für das Arbeitsmedium weist einen Einlass und einen Auslass auf. Einlass und Auslass der Leitung können sich an unterschiedlichen Seiten des Gehäuses befinden. Vorzugsweise befinden sich Einlass und Auslass der Leitung für das Arbeitsmedium an derselben Seite des Gehäuses.

Als Latentwärmespeichermaterial kann in den erfindungsgemäßen Latentwärmespeichermodulen ein Phasenübergangsmaterial (PCM) zum Einsatz kommen.

Wenn das erfindungsgemäße Latentwärmespeichermodul (beispielsweise in einem Fassadenelement) zum Heizen genutzt werden soll, liegt die Phasenübergangstemperatur oberhalb der gewünschten Raumtemperatur. Vorzugsweise liegt die Phasenübergangstemperatur im Bereich zwischen ungefähr 28°C und ungefähr 35°C, bevorzugt bei ungefähr 32°C. Wenn das erfindungsgemäße Latentwärmespeichermodul (beispielsweise in einem Fassadenelement) zum Kühlen genutzt werden soll, liegt die Phasenübergangstemperatur unterhalb der gewünschten Raumtemperatur. Vorzugsweise liegt die Phasenübergangstemperatur im Bereich zwischen ungefähr 18°C und ungefähr 25°C, bevorzugt bei ungefähr 21°C.

In einer weiteren bevorzugten Ausführungsform ist mindestens eine Oberfläche des Gehäuses des Latentwärmespeichermoduls mit einer Beschichtung versehen, die die Abstrahlung von Wärmeenergie verbessert.

Wenn das erfindungsgemäße Fassadenelement zum Heizen genutzt werden soll, sollte die äußere Beschichtung der Latentwärmespeichermodule vorzugsweise einen Absorptionskoeffizienten haben, der für den Bereich der Sonneneinstrahlung möglichst nahe bei eins (1) liegt. Solche Beschichtungen ähneln denjenigen von Solarthermiemodulen. In einer bevorzugten Variante sind die Latentspeichermodule lackiert oder im Fall von Aluminiumprofilen eloxiert.

Wenn das erfindungsgemäße Fassadenelement zum Kühlen genutzt werden soll, sollte die äußere Beschichtung der Latentwärmespeichermodule vorzugsweise einen Emissionskoeffizienten haben, der für den Bereich der Umgebungsstrahlung möglichst nahe bei eins (1) liegt. Solche Beschichtungen ähneln denjenigen von Solarthermiemodulen. In einer bevorzugten Variante sind die Latentspeichermodule lackiert oder im Fall von Aluminiumprofilen eloxiert.

Vorzugsweise weist das Latentwärmespeichermaterial ein Salzhydrat, ein Paraffin, eine Fettsäure oder eine Kombination aus diesen Materialien auf. Weiter bevorzugt weist das Latentwärmespeichermaterial zusätzliche Trägerstoffe wie Aluminiumschaum, Kohlenstoffnanoröhren, Graphitflakes, Metallschäume oder eine Kombination dieser Stoffe auf. Dadurch können die thermische Leitfähigkeit sowie die elektrische Leitfähigkeit des Latentwärmespeichermoduls erhöht werden. Die auf das Latentwärmespeichermodul einwirkende Temperatur kann somit äußerst effizient zu dem Latentwärmespeichermaterial geleitet werden. Dadurch ist es möglich, die Interaktion zwischen dem im Latentwärmespeichermodul angeordneten Latentwärmespeichermaterial und dem Arbeitsmedium zu steigern.

Salzhydrate sind kostengünstig und leicht verfügbar. Bei einem Phasenwechsel weisen sie jedoch bei nicht optimierter Zusammensetzung die Tendenz zum Unterkühlen auf und die Komponenten schmelzen nicht übereinstimmend, was in einer Trennung resultieren kann.

Fettsäuren und Paraffine haben den Vorteil, dass sie physikalisch und chemisch stabil sind, ein gutes thermisches Verhalten sowie eine einstellbare Übergangszone besitzen. Bei Paraffinwachsen hängt die Phasenwechseltemperatur von der Kettenlänge ab. Im Vergleich zu Salzhydraten weisen sie eine geringere Wärmespeicherkapazität pro Volumeneinheit auf.

Ein idealer Kandidat für ein Phasenwechselmaterial sollte bevorzugt eine hohe Schmelzwärme, eine hohe Wärmeleitfähigkeit, eine hohe spezifische Wärmekapazität sowie eine geringe Volumenänderung aufweisen. Außerdem sollte er bevorzugt nicht korrosiv und nicht-toxisch sein. Des Weiteren sollte er nur geringfügig oder gar nicht zu Zersetzung oder Unterkühlung führen.

Wenn ein korrosives Phasenwechselmaterial zum Einsatz kommt, werden vom Phasenwechselmaterial berührte Wände vorzugsweise beschichtet, um die Korrosion der Latentwärmespeichermodule zu verhindern, beispielsweise durch Tauchen in Epoxylack.

Im Folgenden sind einige Salzhydrate und organische Phasenwechselmaterialien und deren Schmelzpunkt beispielhaft aufgelistet.

| Phasenwechselmaterial: | Schmelzpunkt [°C]: | Schmelzwärme [kJ/kg]: |
|---|---|---|
| Kaliumfluorid Tetrahydrat | 18,5-19 | 231 |
| Calciumchlorid Hexahydrat | 29,7 | 171 |
| Butyl Stearat | 18-23 | 140 |
| Dodecanol | 17,5 - 23,3 | 188,8 |
| Propyl Palmitat | 16-19 | 186 |

Vorzugsweise werden als Latentwärmespeichermaterial Paraffinwachse und/oder Salzhydratmischungen verwendet. Besonders bevorzugt wird für ein Phasenwechselmaterial mit einer Phasenwechseltemperatur von 21°C eine Mischung aus Ammoniumchlorid, Calciumchlorid, Kaliumchlorid und Magnesiumchlorid verwendet. Besonders bevorzugt wird für ein Phasenwechselmaterial mit einer Phasenwechseltemperatur von 31°C eine Mischung aus Natriumcetat und Harnstoff verwendet.

Ebenfalls bevorzugt wird als Phasenwechselmaterial in Latentwärmespeichermodulen, die zum Heizen geeignet sind, das als RUBlTHERM® RT31 und/oder das als RUBlTHERM® SP31 von der Firma Rubitherm Technologies GmbH, Berlin angebotene Wärmespeichermaterial verwendet. Ebenfalls bevorzugt wird als Phasenwechselmaterial in Latentwärmespeichermodulen, die zum Kühlen geeignet sind, das als RUBlTHERM® RT21HC und/oder das als RUBlTHERM® SP21E von der Firma Rubitherm Technologies GmbH, Berlin angebotene Wärmespeichermaterial verwendet.

Erfindungsgemäß ist weiter vorgesehen, dass die vorstehend beschriebenen Latentwärmespeichermodule in den ebenfalls vorstehend beschriebenen Fassadenelementen zum Einsatz kommen können.

Die vorliegende Erfindung betrifft weiterhin ein Verfahren zum Klimatisieren eines Gebäudes. Das Verfahren verwendet mindestens ein Fassadenelement, wie oben beschrieben. Um Wärme/Kälte zwischen dem Gebäude und den Latentwärmespeichermodulen (bzw. dem in den Modulen enthaltenen Latentwärmespeichermaterial) des Fassadenelements auszutauschen, wird ein Arbeitsmedium verwendet, das vom Gebäude durch das Fassadenelement und wieder zurück zum Gebäude strömt.

In einer bevorzugten Ausführungsform wird das Fassadenelement je nach Bedarf vom Gebäude weggeklappt oder an das Gebäude angeklappt.

Der Einlass und der Auslass der Leitungsanordnung im Fassadenelement sind dabei mit den entsprechenden Leitungen im Gebäude fluidisch verbunden. Eine solche fluidische Verbindung kann beispielsweise durch entsprechende Leitungen (Schläuche) erfolgen, die die Verbindung sowohl im weggeklappten Zustand als auch im angeklappten Zustand des Fassadenelements aufrechterhalten. Es ist auch vorgesehen, dass die fluidische Verbindung nur im angeklappten Zustand des Fassadenelements zustande kommt.

In einer weiteren bevorzugten Ausführungsform wird die Position des Fassadenelements so eingestellt, dass die Sonneneinstrahlung auf die Latentwärmespeichermodule maximiert wird. Die Einstellung der Position des Fassadenelements wird vorzugsweise entweder kontinuierlich oder in vorbestimmten Zeitabständen angepasst, um die Sonneneinstrahlung auf die Latentwärmespeichermodule immer wieder zu optimieren. Durch eine solche Nachführung des Fassadenelements ist es möglich, den Energieeintrag der Sonnenstrahlung auf die Latentwärmespeichermodule über den ganzen Tag hinweg möglichst hoch zu halten.

In einer weiteren bevorzugten Ausführungsform werden einer oder mehrere der Parameter Sonnenstand, Intensität der Sonnenstrahlung, Windgeschwindigkeit, Außenlufttemperatur, Raumlufttemperatur, Temperatur des Latentwärmespeichermaterials ermittelt und für die Bestimmung der Position des Fassadenelements berücksichtigt. Insbesondere ist vorgesehen, dass das Fassadenelement an das Gebäude angeklappt wird, wenn die Windgeschwindigkeit so hoch wird, dass eine Beschädigung des Fassadenelements und/oder des Gebäudes zu befürchten ist. Das Fassadenelement kann auch an das Gebäude angeklappt werden, um eine Überhitzung des Latentwärmespeichermaterials zu vermeiden.

In einer weiteren bevorzugten Ausführungsform, die zum Heizen des Gebäudes dient, wird das Fassadenelement tagsüber und/oder wenn die Intensität der Sonnenstrahlung einen vorbestimmten Wert überschreitet vom Gebäude weggeklappt, um Sonnenenergie im Latentwärmespeichermaterial zu speichern, und über Nacht und/oder wenn die Intensität der Sonnenstrahlung einen vorbestimmten Wert unterschreitet an das Gebäude angeklappt wird.

Hierdurch kann tagsüber bzw. bei ausreichender Sonneneinstrahlung Wärmeenergie in den Latentwärmespeichermodulen gespeichert werden. Wenn die Sonneneinstrahlung nicht mehr ausreichend ist, um weitere Wärmeenergie in den Modulen zu speichern, d.h. insbesondere nachts, und/oder wenn das Latentwärmespeichermodul voll geladen ist, kann durch das Anklappen des Fassadenelements die thermische Isolierung des Gebäudes verbessert werden, insbesondere wenn das Fassadenelement auf seiner Außenseite mit einem Wärmedämmmaterial versehen ist.

Bevorzugterweise wird ein zum Heizen bestimmtes Fassadenelement vom Gebäude weggeklappt, wenn die Sonnenstrahlung oberhalb von ungefähr 100 W/m² bis ungefähr 200 W/m², bevorzugt oberhalb von ungefähr 150 W/m² liegt und wenn die Raumlufttemperatur unterhalb von ungefähr 21°C bis ungefähr 25°C, bevorzugt unterhalb von ungefähr 24°C liegt (Heizungsbedarf), um Wärme in den Latentwärmespeichermodulen zu speichern.

Bevorzugterweise wird das Arbeitsmedium durch ein zum Heizen bestimmtes Fassadenelement geführt, wenn die Temperatur des Latentwärmespeichermaterial oberhalb der Phasenübergangtemperatur liegt, beispielsweise oberhalb von ungefähr 28°C bis ungefähr 32°C, bevorzugt oberhalb von ungefähr 30°C und wenn die Raumlufttemperatur unterhalb von ungefähr 21°C bis ungefähr 25°C, bevorzugt unterhalb von ungefähr 24°C liegt (Heizungsbedarf), um Wärme aus den Latentwärmespeichermodulen zu entnehmen.

In einer weiteren bevorzugten Ausführungsform, die zum Heizen des Gebäudes dient, ist das Arbeitsmedium Luft, die zunächst (vom Gebäude kommend) durch das Fassadenelement geführt wird, um Wärme von den Latentwärmespeichermodulen aufzunehmen. Anschließend wird die erwärmte Luft einer Luftzufuhrverteilung des Gebäudes und/oder mindestens einem Raum des Gebäudes zugeführt.

In einer weiteren Ausführungsform kann Außenluft direkt über den Flügel angesaugt werden und anschließend, nach dem durch- bzw. umströmen der Latentwärmespeichermodule erwärmt der Raumluft oder einem Verteilungsgerät zugeführt werden.

In einer weiteren bevorzugten Ausführungsform, die zum Kühlen des Gebäudes dient, wird das Fassadenelement über Nacht und/oder wenn die Außenlufttemperatur einen vorbestimmten Wert unterschreitet, vom Gebäude weggeklappt, um die im Latentwärmespeichermaterial in den Modulen gespeicherte Wärmeenergie durch Strahlung und/oder Konvektion abzugeben. Tagsüber und/oder wenn die Außenlufttemperatur einen vorbestimmten Wert überschreitet, wird das Fassadenelement an das Gebäude angeklappt.

Hierdurch kann tagsüber, wenn eine Wärmeabgabe vom Fassadenelement nicht oder nicht so gut möglich ist, Wärme vom Gebäude zu den Latentwärmespeichermodulen transportiert und in diesen gespeichert werden. Insbesondere nachts kann die gespeicherte Wärme dann durch Strahlung in das Weltall bzw. durch Konvektion an die Außenluft abgegeben werden. Das Anklappen des Fassadenelements an das Gebäude tagsüber dient zusätzlich der thermischen Isolierung des Gebäudes und reduziert die Aufheizung des Gebäudes.

Bevorzugterweise wird ein zum Kühlen bestimmtes Fassadenelement vom Gebäude weggeklappt, wenn die Außenlufttemperatur unterhalb der Phasenübergangstemperatur des Latentwärmespeichermaterials liegt, beispielsweise unterhalb von ungefähr 20°C bis ungefähr 22°C, bevorzugt unterhalb von ungefähr 21°C (z.B. in einer klaren Nacht wenn die atmosphärische Himmelsstrahlung ein Abstrahlen der warmen PCM Gehäuse zusätzlich zu der kalten Aussenluft unterstüzt) und wenn die Raumlufttemperatur oberhalb von ungefähr 22°C bis ungefähr 25°C, bevorzugt oberhalb von ungefähr 23°C liegt (Kühlbedarf), um Wärme von den Latentwärmespeichermodulen durch Konvektion und/oder Strahlung abzugeben.

Bevorzugterweise wird das Arbeitsmedium durch ein zum Kühlen bestimmtes Fassadenelement geführt, wenn die Temperatur des Latentwärmespeichermaterial unterhalb der Phasenübergangtemperatur liegt, beispielsweise unterhalb von ungefähr 20°C bis ungefähr 22°C, bevorzugt unterhalb von ungefähr 21°C und wenn die Raumlufttemperatur oberhalb von ungefähr 22°C bis ungefähr 25°C, bevorzugt oberhalb von ungefähr 23°C liegt (Kühlbedarf), um Wärme aus dem Gebäude an die Latentwärmespeichermodule abzugeben.

In einer weiteren bevorzugten Ausführungsform, die zum Kühlen des Gebäudes dient, ist das Arbeitsmedium Luft, die zunächst der Luftabfuhrverteilung des Gebäudes und/oder mindestens einem Raum des Gebäudes entnommen wird. Diese (warme) Luft wird dann durch das Fassadenelement geführt, um Wärme an die Latentwärmespeichermodule abzugeben. Anschließend wird die abgekühlte Luft wieder einer Luftzufuhrverteilung des Gebäudes und/oder mindestens einem Raum des Gebäudes zugeführt.

In einer weiteren bevorzugten Ausführungsform sind Fassadenelemente zum Heizen (auch Heizflügel genannt) auf der Westseite oder Südseite des Gebäudes angeordnet. Mit Sonnenaufgang öffnen sich die Flügel. Die Stellung der Flügel folgt dem Sonnenlauf, so dass die Nutzung der Sonnenstrahlung immer am höchsten ist. Die Flügel sind im Innern ähnlich wie Solarkollektoren aufgebaut, so dass auch im Winter hohe Energiedichten und Temperaturen entstehen. Wenn die Speicher vollgeladen sind, bei fehlender Sonneneinstrahlung oder bei Einbruch der Dämmerung legen sich die Flügel an das Gebäude an. Die im Innern gespeicherte Wärme wird kontinuierlich an die Lüftungsgeräte abgegeben. Die Kapazität ist so gewählt, dass auch ohne Sonnenschein für einige Tage genug Wärme vorhanden ist. Der Einsatz der Heizflügel findet vor allem im Winter und in der gesamten Übergangsperiode (Herbst und Frühjahr) statt. Im Sommer muss man nicht heizen und die Flügel bleiben angelegt, wodurch auch die Dämmung des Gebäudes verbessert und somit die Aufheizung verringert wird.

Die Heizflügel sind für die Heizung des Gebäudes geeignet und sind deshalb hauptsächlich im Winter und in den Übergangsperioden (Frühling und Herbst) aktiv. Sie befinden sich bevorzugt an der Westseite oder Südseite des Gebäudes. Bei Solarstrahlung werden sie sich in die Richtung der Sonne öffnen und sich ständig mit der Sonne bewegen, damit die maximale Solarstrahlung absorbiert werden kann. Mit der gesammelten Sonnenenergie wird sich das PCM aufwärmen und ab einer Temperatur von z.B. 31°C schmelzen. Nach dem Phasenwechsel kann das PCM im flüssigen Zustand die Wärme speichern. Diese Wärme wird beim Entladen des PCM auf die Frischluft aus der Komfortlüftung, welche nachher in den Räumen eingeblasen wird, abgegeben. Die Heizflügel arbeiten mit der Wärmerückgewinnung aus der Komfortlüftung zusammen und reduzieren den Energieverbrauch des Gebäudes.

Als Variante können die Heizflügel auch vor der Wärmerückgewinnung als sogenannter Vorwärmer / Frostschutz angeordnet werden. In diesem Fall liegt PCM Schmelztemperatur im Bereich von 5 bis 20°C, bevorzugt 10°C. Damit kann die Luft optimal vorgewärmt werden.

In einer weiteren bevorzugten Ausführungsform sind Fassadenelemente zum Kühlen (auch Kühlflügel genannt) auf der Ostseite oder Nordseite des Gebäudes angeordnet. In Perioden hoher Aussentemperatur und Sonneneinstrahlung (vornehmlich im Sommer, oder bei Fön) können im Gebäude durch passive Sonneneinstrahlung erhöhte Raumtemperaturen entstehen. Die Kühlflügel sind tagsüber am Gebäude angelegt. Sie werden vor allem nachts geöffnet. Die Kühlflügel sind bevorzugt auf der Ostseite oder Nordseite des Gebäudes angeordnet. Sie öffnen sich leicht geneigt so, dass sie die Wärmestrahlung in den Himmel, idealerweise in sternenklaren Nächten in das Weltall, abgeben. Auch wenn z.B. im Sommer die Nachttemperaturen noch relativ hoch sind, so kann aufgrund der hohen Emission bedingt durch spezielle Beschichtung und den Strahlungsaustausch viel Wärme abgegeben werden, resp. Kälte gespeichert werden. Tagsüber bei hoher passiver Sonneneinstrahlung in das Gebäude, wird die Kälte genutzt um die Raumluft direkt auf natürliche Weise auf komfortable Temperaturen abzusenken.

Die Kühlflügel sind für die Kühlung geplant und sind hauptsächlich im Sommer aktiv. Während der Nacht sind die Kühlflügel geöffnet und können sich dank Wärmeübertragung an den kalten Himmel abkühlen. Die Phasenwechseltemperatur beträgt hier z.B. 21°C. Bei dieser Temperatur findet der Phasenwechsel (vom flüssigen in den festen Zustand) statt und die Kälte kann gespeichert werden. Beim Entladen des PCM wird die Kälte direkt an die Raumluft abgegeben. Die Kühlflügel reduzieren den Kühlbedarf des Gebäudes in Perioden hoher Sonneneinstrahlung.

In einer weiteren bevorzugten Ausführungsform ist die Lüftungsanlage des Gebäudes im Winter mit den Heizflügeln verbunden. Die Frischluft, welche zuerst durch den Wärmeaustausch mit der Abluft vorgewärmt ist, strömt durch die Flügel. Somit kann die Frischluft zusätzliche Wärme von den Heizflügeln aufnehmen. Anschliessend wird die aufgeheizte Frischluft in die verschiedenen Räume eingeblasen. Im Fall, dass die Heizflügel nicht hinreichend aufgeheizt sind wird die Zuluft an den Flügeln vorbeigeführt und die fehlende Wärmeenergie wird über die daneben installierte (konventionelle) Heizung (beispielsweise Boden, Wand-, Flächenheizung, Konvektoren, etc.) bereitgestellt.

In einer weiteren bevorzugten Ausführungsform sind die Kühlflügel direkt bestimmten Räumen zugeordnet. Wenn sich die Flügel dank der Abstrahlung während der Nacht hinreichend abkühlen konnten, legen sie sich tagsüber an die Fassade an. Warme Raumluft wird dann durch die Kühlflügel mit Hilfe eines Ventilators geleitet und kühlt sich auf das Niveau der Phasenwechseltemperatur (z.B. 21°C) ab.

Im Sommer besteht kein Heizwärmebedarf, deshalb muss keine Wärmeenergie mit den Heizflügeln gewonnen werden. Aus diesem Grund bleiben die Heizflügel vorzugsweise an der Fassade und sind mit einer Wärmedämmschicht geschützt, um eine Überhitzung zu vermeiden. Wenn es im Winter keine Sonnenstrahlung gibt, sind die Heizflügel im Ruhezustand und somit vorzugsweise an die Fassade angelegt. Erst bei hinreichend starker Solarstrahlung werden sie wieder ausgeklappt.

Im Winter werden die Kühlflügel nicht benötigt, da kein Kühlbedarf besteht. Die Kühlflügel sind im Ruhezustand und damit vorzugsweise an die Fassade angelegt. Sie sind mit Wärmedämmung ausgestattet um Wärmeverluste des Gebäudes zu verringern. Im Sommer (tagsüber) werden die Kühlflügel auch an der Fassade belassen, wenn sich diese nicht abkühlen können. Damit sind sie vor unnötiger Erwärmung geschützt.

Die Flügel können auch genutzt werden, wenn sie nicht vollständig aufgeladen sind. Die Flügel können ebenfalls wieder aufgeladen werden, wenn sie die Wärme noch nicht vollständig abgegeben haben. Der Vorteil des PCM ist, dass die Temperatur während des gesamten Lade- und Entladevorgangs praktisch konstant ist. Die Temperatur im Flügel ist somit immer gleich solange der Flügel teilbeladen ist. Erst nach vollständiger Beladung des Heizflügels wird sich das PCM dort auf über z.B. 31°C erwärmen. Es kann noch zusätzlich sensible Wärme gespeichert werden. Wenn der Flügel vollbeladen ist, kann er vorzugsweise eingeklappt werden, um ihn vor Überhitzung zu schützen.

Der Kühlflügel kann sich eigentlich nicht unterkühlen. Wird er allerdings nicht genutzt, wird er vorzugsweise angeklappt, um ihn selbst zu schützen und dem Gebäude zusätzliche Wärmedämmung zu geben.

Als Arbeitsmedium bezeichnet man das Fluid, welches als Wärmeträger für den Wärme-/Kälteaustausch zwischen Gebäude und Flügeln dient. Bevorzugt wird Luft als Arbeitsmedium verwendet. Als Arbeitsmedium dient insbesondere die Raumluft. Diese hat den Vorteil, dass die Wärmeübertragung möglichst direkt erfolgt. Vorzugsweise wird auf Wärmeüberträger verzichtet, da der jeweils auftretende Widerstand insbesondere die Kühlflügel in Ihrer Anwendungszeit reduzieren könnte.

Es ist aber auch vorgesehen, dass die Flügel mit einem flüssigen Medium durchströmt werden, beispielsweise mit einer frostsicheren Wasser-Glykol-Mischung. Dieses erwärmte Medium wird dann in das Gebäude (beispielsweise in die Kellerräume) geführt, wo die Bereitstellung der Fussbodenheizung mittels Wärmepumpe geschehen kann.

Als Arbeitsmedium können aber auch andere Gase (Helium, Stickstoff, Kohlendioxid) oder andere Flüssigkeiten (Wasser, Öle, Glycerin) verwendet werden.

Luft als Arbeitsmedium hat allerdings die Vorteile, dass bei Undichtigkeiten keine Flüssigkeit austreten kann und dass das Gewicht und die Trägheit der Flügel geringer sind.

Die Ankopplung des Arbeitsmediums kann direkt (d.h. über eine starre Verbindung) erfolgen (vorzugsweise, wenn der Flügel unbeweglich ist), oder auch über (flexible) Schläuche (bevorzugt zwei: einer für den Vorlauf, einer für den Rücklauf). Die Ankopplung des Arbeitsmediums kann auch mittels einer Kupplung erfolgen. In diesem Fall findet ein Wärmeaustausch des Flügels mit der Umgebung genau dann statt, wenn der Flügel ausgeklappt ist und ein Wärmeaustausch mit der Raumluft findet nur statt, wenn der Flügel am Gebäude anliegt und dabei die Kupplung offen ist.

Die Ankopplung findet bevorzugt statt, in dem sowohl auf Flügelseite als auch auf Gebäudeseite eine Steckkupplung vorgesehen ist, die sich beide gleichzeitig öffnen um so bei angelegtem Fassadenelement einen freien Austausch der Luft zu ermöglichen. Bei geöffnetem Fassadenelement sind beide Klappen geschlossen und die Luft im Fassadenelement ist eingeschlossen.

Anhand der Zeichnung wird die Erfindung nachstehend eingehend erläutert. Es zeigt:
Fig. 1 eine schematische Darstellung einer bevorzugten Ausführungsform eines erfindungsgemäßen Fassadenelements zum Heizen eines Gebäudes;
Fig. 2 eine schematische Darstellung eines Schnitts durch eine bevorzugte Ausführungsform eines erfindungsgemäßen Fassadenelements zum Heizen eines Gebäudes;
Fig. 3 eine schematische Darstellung einer bevorzugten Ausführungsform eines erfindungsgemäßen Fassadenelements zum Kühlen eines Gebäudes;
Fig. 4 eine schematische Darstellung eines Schnitts durch eine bevorzugte Ausführungsform eines erfindungsgemäßen Fassadenelements zum Kühlen eines Gebäudes;
Fig. 5 einen Schnitt durch eine bevorzugte Ausführungsform eines Latentwärmespeichermoduls für ein Fassadenelement zum Kühlen eines Gebäudes;
Fig. 6 einen Schnitt durch eine bevorzugte Ausführungsform eines Latentwärmespeichermoduls für ein Fassadenelement zum Heizen eines Gebäudes;
Fig. 7 einen Schnitt durch eine weitere bevorzugte Ausführungsform eines Latentwärmespeichermoduls für ein Fassadenelement zum Kühlen eines Gebäudes;
Fig. 8 einen Schnitt durch eine weitere bevorzugte Ausführungsform eines Latentwärmespeichermoduls für ein Fassadenelement zum Heizen eines Gebäudes;
Fig. 9 die teilweise Darstellung eines vertikalen Schnitts durch eine bevorzugte Ausführungsform eines Fassadenelements zum Kühlen eines Gebäudes;
Fig. 10 die teilweise Darstellung eines vertikalen Schnitts durch eine bevorzugte Ausführungsform eines Fassadenelements zum Heizen eines Gebäudes;
Fig. 11 die teilweise Darstellung eines horizontalen Schnitts durch eine bevorzugte Ausführungsform eines Fassadenelements zum Klimatisieren eines Gebäudes;
Fig. 12 einen Schnitt durch eine weitere bevorzugte Ausführungsform eines Latentwärmespeichermoduls für ein Fassadenelement zum Heizen eines Gebäudes;
Fig. 13 eine schematische Darstellung der Einbindung eines erfindungsgemäßen Fassadenelements zum Heizen eines Gebäudes in die Heizungsanlage des Gebäudes;
Fig. 14 eine schematische Darstellung der Einbindung eines erfindungsgemäßen Fassadenelements zum Kühlen eines Gebäudes in die Lüftungsanlage des Gebäudes.

Nachfolgend wird der Aufbau der erfindungsgemäßen Fassadenelemente durch Latentwärmespeichermodule beschrieben.

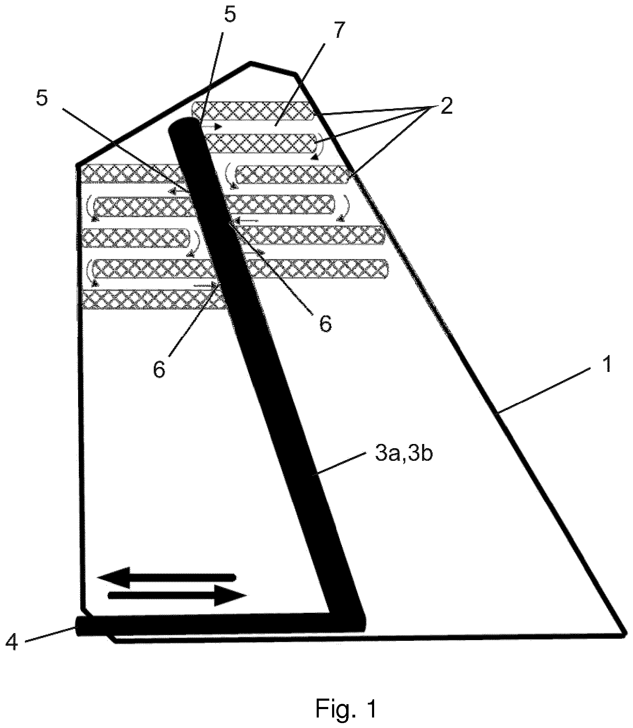

Figur 1 zeigt schematisch ein erfindungsgemäßes Fassadenelement zum Heizen eines Gebäudes (auch Heizflügel genannt). Der Heizflügel weist einen Trägerrahmen 1 auf, an dem mehrere Latentwärmespeichermodule 2 befestigt sind. Die Befestigung der Latentwärmespeichermodule 2 am Trägerrahmen 1 ist in dieser schematischen Zeichnung nicht dargestellt. Der Heizflügel umfasst weiterhin eine zentrale Zuleitung 3a bzw. Ableitung 3b für das Arbeitsmedium. Am unteren Ende der dargestellten zentralen Zuleitung 3a bzw. Ableitung 3b befindet sich der Einlass bzw. der Auslass 4 für das Arbeitsmedium. Die zentrale Zuleitung 3a bzw. Ableitung 3b für das Arbeitsmedium weist an mehreren Stellen Öffnungen 5, 6 auf, an denen das Arbeitsmedium aus der zentralen Zuleitung 3a austreten kann bzw. wieder in die zentrale Ableitung 3b eintreten kann. Die Latentwärmespeichermodule 2 sind innerhalb des Trägerrahmens 1 so angeordnet, dass ein Pfad 7 entsteht, entlang dem das Arbeitsmedium auf dem Weg vom Auslass 5 der zentralen Zuleitung 3a zum Einlass 6 der zentralen Ableitung 3b die Latentwärmespeichermodule 2 umströmt. Die zentrale Zuleitung 3a und Ableitung 3b bilden zusammen mit dem durch die Module 2 im Trägerrahmen 1 gebildeten Pfad 7 eine Leitungsstruktur für das Arbeitsmedium.

In der Darstellung gemäß Figur 1 kommt das Arbeitsmedium, nachdem es aus der zentralen Zuleitung 3a ausgetreten ist, jeweils nur mit fünf verschiedenen Latentwärmespeichermodulen 2 in Kontakt, bevor es wieder in die zentrale Ableitung 3b eintritt. Es ist aber vorgesehen, dass die Anordnung der Latentwärmespeichermodule 2 im Trägerrahmen 1 auch so gestaltet sein kann, dass das Arbeitsmedium mit mehr oder weniger Latentwärmespeichermodulen 2 in Kontakt kommt, insbesondere auch, dass das Arbeitsmedium mit allen Latentwärmespeichermodulen 2 in Kontakt kommt, bevor es wieder in die zentrale Ableitung 3b eintritt. In der Darstellung gemäß Figur 1 sind auch nur einige Latentwärmespeichermodule 2 dargestellt, die im oberen Bereich des Heizflügels angeordnet sind. Die weiter unten angeordneten Latentwärmespeichermodule sind nicht dargestellt.

Selbstverständlich müssen sich die zentrale Zuleitung 3a und Ableitung 3b für das Arbeitsmedium auch nicht in der Mitte des Heizflügels befinden. Sie können auch an einem oder an mehreren Rändern des Heizflügels angeordnet sein.

In der Darstellung der Figur 1 hat der Trägerrahmen 1 eine unregelmäßige polygonale Form. Selbstverständlich können auch andere Formen für die Grundstruktur des Fassadenelements verwendet werden, beispielsweise rechteckig, dreieckig, rund, oval, etc.

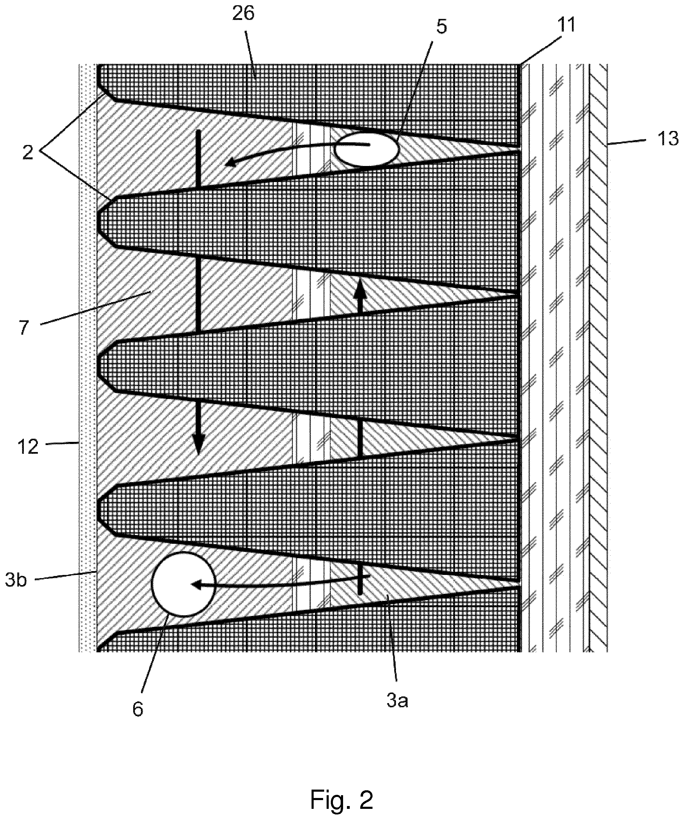

In Figur 2 ist schematisch ein Ausschnitt aus einem Schnitt durch ein erfindungsgemäßes Fassadenelement zum Heizen eines Gebäudes gezeigt. Am Trägerrahmen 1, der eine Befestigungsfläche 11 enthält, sind mehrere Latentwärmespeichermodule 2 befestigt, die mit einem Latentwärmespeichermaterial 26 gefüllt sind. Wiederum ist die Befestigung der Latentwärmespeichermodule 2 am Trägerrahmen 1 in der schematischen Zeichnung nicht dargestellt. Gegenüber der Befestigungsfläche 11 ist der Heizflügel mit einer transparenten Abdeckung 12 versehen, die für Infrarotstrahlung und sichtbares Licht durchlässig ist. Durch diese transparente Abdeckung 12 wird der Heizflügel dicht für das Arbeitsmedium abgeschlossen. Im Inneren des Heizflügels entsteht dadurch ein Pfad 7 (also eine Leitungsstruktur im Sinne der vorliegenden Erfindung) für das Arbeitsmedium, bei dem das Arbeitsmedium mit den Latentwärmespeichermodulen 2 in Kontakt kommt und diese umströmt (vergleiche Figur 1).

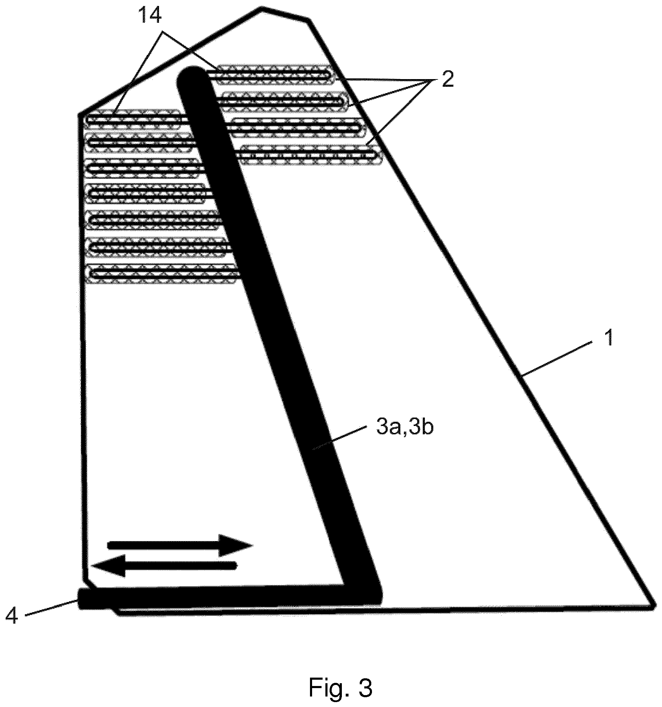

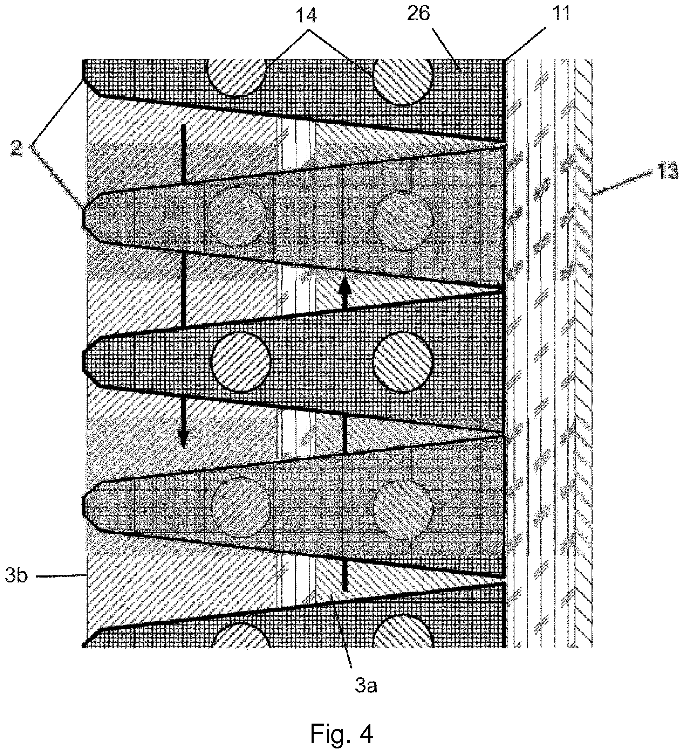

Ebenfalls schematisch dargestellt in Figur 2 ist eine Öffnung 5 in der zentralen Zuleitung 3a, aus der das Arbeitsmedium austreten kann, sowie eine Öffnung 6 in der zentralen Ableitung 3b, durch die das Arbeitsmedium in die zentrale Ableitung 3b eintreten kann, nachdem es die Latentwärmespeichermodule 2 umströmt hat. Die transparente Abdeckung 12 hat den Vorteil, dass Wärmeverluste durch Konvektion verringert werden, da die erwärmte Luft im Inneren des Heizflügels zwischen den Latentwärmespeichermodulen 2 verbleibt. Dies gilt insbesondere auch dann, wenn das Arbeitsmedium die Latentwärmespeichermodule 2 des Heizflügels nicht umströmt, sondern mittels Leitungen durch die Latentwärmespeichermodule geführt wird, wie dies nachfolgend in den Figuren 3 und 4 für einen Kühlflügel dargestellt ist. Auf der Außenseite des Fassadenelements ist ein Wärmedämmmaterial 13 angeordnet.

Figur 3 zeigt schematisch ein erfindungsgemäßes Fassadenelement zum Kühlen eines Gebäudes (auch Kühlflügel genannt). Der Kühlflügel weist einen Trägerrahmen 1 auf, an dem mehrere Latentwärmespeichermodule 2 befestigt sind. Die Befestigung der Latentwärmespeichermodule 2 am Trägerrahmen 1 ist in dieser schematischen Zeichnung nicht dargestellt. Der Kühlflügel umfasst weiterhin eine zentrale Zuleitung 3a bzw. Ableitung 3b für das Arbeitsmedium. Am unteren Ende der dargestellten zentralen Zuleitung 3a bzw. Ableitung 3b befindet sich der Einlass bzw. der Auslass 4 für das Arbeitsmedium. Von der zentralen Zuleitung 3a zweigen Leitungen 14 für das Arbeitsmedium ab, die jeweils durch ein Latentwärmespeichermodul 2 geführt werden und schließlich in der zentralen Ableitung 3b münden. Es ist auch vorgesehen, dass die abgezweigte Leitung 14 für das Arbeitsmedium durch mehrere Latentwärmespeichermodule 2 geführt wird, bevor sie wieder in der zentralen Ableitung 3b mündet. Bei einem solchen Kühlflügel wird der Pfad für das Arbeitsmedium nicht, wie in Figur 1 dargestellt, durch die Latentwärmespeichermodule 2 definiert. Er ist vielmehr durch die Leitungsstruktur bestehend aus der zentralen Zuleitung 3a und Ableitung 3b sowie den abgezweigten Leitungen 14 durch die Latentwärmespeichermodule 2 gegeben. Daher erstrecken sich die Latentwärmespeichermodule 2 in dieser Darstellung auch von der zentralen Zuleitung 3a bzw. Ableitung 3b jeweils bis zum Rand des Trägerrahmens 1.

Entsprechend der Darstellung gemäß Figur 1 sind auch hier nur wieder einige Latentwärmespeichermodule 2 dargestellt, die im oberen Bereich des Kühlflügels angeordnet sind. Die weiter unten angeordneten Latentwärmespeichermodule sind nicht dargestellt.

Auch hier müssen sich die zentrale Zuleitung 3a und Ableitung 3b für das Arbeitsmedium nicht in der Mitte des Kühlflügels befinden. Sie können auch an einem oder an mehreren Rändern des Kühlflügels angeordnet sein.

In Figur 4 ist schematisch ein Ausschnitt aus einem Schnitt durch ein erfindungsgemäßes Fassadenelement zum Kühlen eines Gebäudes gezeigt. Am Trägerrahmen 1, der eine Befestigungsfläche 11 enthält, sind mehrere Latentwärmespeichermodule 2 befestigt. Wiederum ist die Befestigung der Latentwärmespeichermodule 2 am Trägerrahmen 1 in der schematischen Zeichnung nicht dargestellt. Anders als beim Heizflügel in Figur 2 ist hier keine transparente Abdeckung vorgesehen, da das Arbeitsmedium mittels Leitungen 14 durch die Latentwärmespeichermodule 2 geführt wird. Das Fehlen der transparenten Abdeckung hat den zusätzlichen Vorteil, dass die Wärmeabgabe an die Umgebung von den Latentwärmespeichermodulen 2 durch Konvektion und Strahlung verbessert wird.

Die von der zentralen Zuleitung 3a abgezweigte Leitung 14 kann (wie in Figur 3 schematisch dargestellt) in einer Schleife durch das Latentwärmespeichermodul 2 geführt werden, wodurch der Wärmeaustausch zwischen Arbeitsmedium und Latentwärmespeichermaterial 26 aufgrund des zweimaligen Durchströmens erhöht wird.

Auch wenn in den Figuren 1-4 jeweils eine zentrale Zuleitung 3a und eine zentrale Ableitung 3b dargestellt ist, muss die Anzahl der zentralen Zuleitungen nicht notwendigerweise der Anzahl der zentralen Ableitungen entsprechen. Es kann beispielsweise nur eine zentrale Zuleitung vorgesehen sein, während zwei oder noch mehr zentrale Ableitungen bestehen.

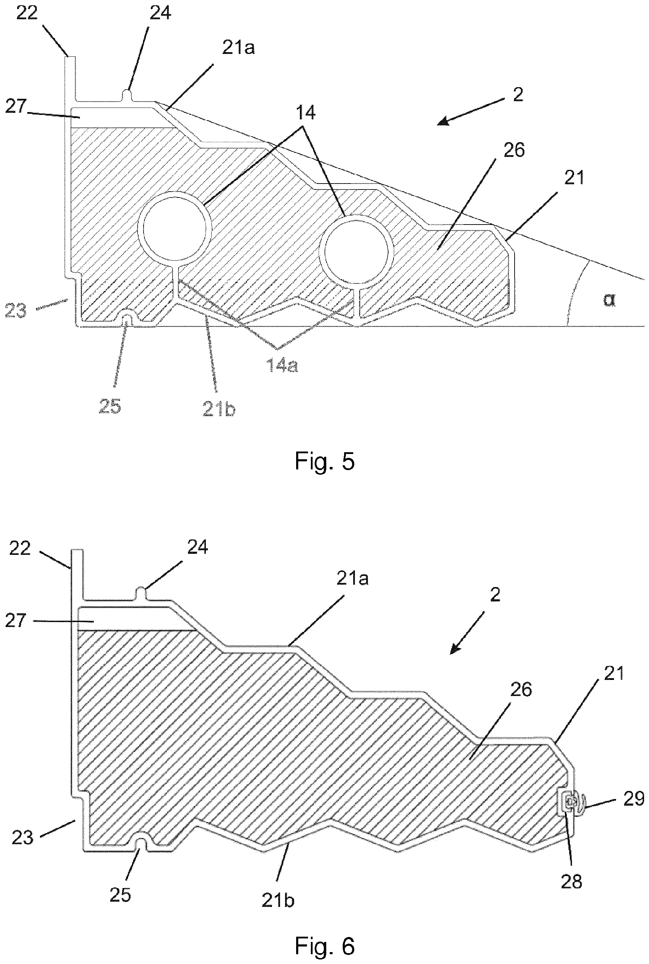

Figur 5 zeigt einen Schnitt durch eine bevorzugte Ausführungsform eines Latentwärmespeichermoduls 2 gemäß der vorliegenden Erfindung, das zum Kühlen eines Gebäudes verwendet werden kann. Das Latentwärmespeichermodul 2 besitzt ein im Wesentlichen längliches Gehäuse 21, das vorzugsweise aus einem Aluminiumsprofil besteht. Die Wandstärke des Aluminiumsprofils beträgt vorzugsweise etwa 2 mm. Das Gehäuse besitzt eine Oberseite 21a und eine Unterseite 21b, die beide gefaltet ausgeführt sind. Durch die Faltung wird sowohl die Oberfläche des Gehäuses erhöht als auch dessen Steifigkeit. Auch wenn die Unterseite 21b des Gehäuses 21 gefaltet ausgeführt ist, so verläuft sie doch in der Darstellung im Wesentlichen horizontal. Entsprechend verläuft auch die Oberseite 21a des Gehäuses 21, obwohl auch sie gefaltet ausgeführt ist, im Wesentlichen in einer Ebene, die mit der horizontalen Ebene der Unterseite 21b des Gehäuses 21 einen Winkel α einschließt. Bevorzugt beträgt dieser Winkel etwa 20°.

In den gezeigten Ausführungsformen ist die Grundform des Querschnitts des Gehäuses des Latentwärmespeichermoduls im Wesentlichen trapezförmig. Es können aber auch andere Gehäuseformen zum Einsatz kommen, beispielsweise mit rechteckigem oder dreieckigem Querschnitt.

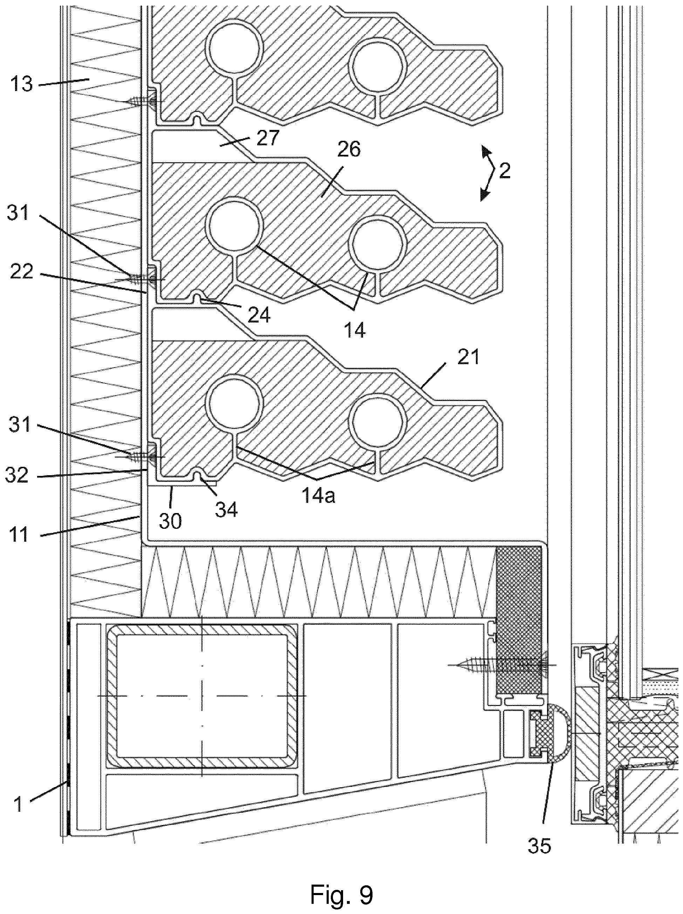

Das Gehäuse 21 weist weiterhin einen Befestigungsabschnitt 22 auf, mit dem das Latentwärmespeichermodul 2 an einem Befestigungsabschnitt des Trägerrahmens befestigt werden kann. Im Befestigungsabschnitt 22 des Gehäuses 21 können beispielsweise Montagelöcher vorgesehen sein, die eine Befestigung des Gehäuses 21 am Befestigungsabschnitt des Trägerrahmens beispielsweise mittels Schrauben erlauben (siehe auch Figur 9). Entsprechend weist das Gehäuse 21 eine Aussparung 23 auf, so dass zwei Latentwärmespeichermodule 2 so untereinander montiert werden können, dass der Befestigungsabschnitt 22 des unteren Latentwärmespeichermoduls 2 in der Aussparung 23 des oberen Latentwärmespeichermoduls 2 aufgenommen wird.

Zum Erleichtern der Montage mehrerer Latentwärmespeichermodule 2 weist das Gehäuse 21 an der Oberseite einen Vorsprung 24 und an der Unterseite eine entsprechende Aussparung 25 auf, sodass bei der Montage mehrerer Latentwärmespeichermodule 2 der Vorsprung 24 an der Oberseite des unteren Latentwärmespeichermoduls 2 in die Aussparung 25 an der Unterseite des oberen Latentwärmespeichermoduls 2 einhakt.

Im Inneren des Gehäuses 21 sind zwei Leitungen 14 für das Arbeitsmedium angeordnet, die an ihrem Ende (nahe bei einem Ende des Latentwärmespeichermoduls 2) fluidisch miteinander verbunden sind (nicht dargestellt). Anders ausgedrückt ist im Inneren des Gehäuses 21 eine Leitung 14 angeordnet, die im Wesentlichen U-förmig durch das Latentwärmespeichermodul verläuft (siehe auch Figur 3). Diese Leitungen 14 sind ebenfalls aus Aluminium ausgeführt und sind über Stege 14a mit der Unterseite 21b des Gehäuses 21 verbunden. Hierdurch werden die Leitungen 14 stets ungefähr in der Mitte zwischen Oberseite 21a und Unterseite 21b des Gehäuses 21 gehalten und sind somit stets gleichmäßig vom Latentwärmespeichermaterial 26 umgeben.

Das Gehäuse 21 ist mit einem Latentwärmespeichermaterial 26, vorzugsweise mit einem Salzhydrat oder Paraffin als Phasenwechselmaterial gefüllt. Vorzugsweise liegt die Phasenübergangstemperatur des Phasenwechselmaterials unterhalb der gewünschten Raumtemperatur im Sommer (bevorzugt 21°C oder niedriger). Das Gehäuse 21 ist vorzugsweise nicht vollständig mit dem Latentwärmespeichermaterial 26 gefüllt, sondern es verbleibt ein bestimmtes Restvolumen 27, das mit einem Gas (beispielsweise Luft oder Stickstoff) gefüllt ist, um eine Ausdehnung des Latentwärmespeichermaterials 26 bei Erwärmung und Phasenwechsel zu ermöglichen.

Figur 6 zeigt einen Schnitt durch eine bevorzugte Ausführungsform eines Latentwärmespeichermoduls 2 gemäß der vorliegenden Erfindung, das zum Heizen eines Gebäudes verwendet werden kann. Das Latentwärmespeichermodul 2 der Figur 6 entspricht in vielen Punkten dem Latentwärmespeichermodul 2 der Figur 5, so dass auf diese Punkte nicht noch einmal gesondert eingegangen wird.

Einer der Unterschiede zwischen den Latentwärmespeichermodulen 2 der Figuren 5 und 6 liegt darin, dass das Modul 2 der Figur 6 keine Leitungen im Inneren des Gehäuses 21 aufweist. Wie oben im Hinblick auf die Figuren 1 und 2 beschrieben, ist es beim Heizflügel vorgesehen, dass das Arbeitsmedium nicht durch die Latentwärmespeichermodule 2 hindurch geleitet wird, sondern diese umströmt. Um den Pfad für das Arbeitsmedium beim Umströmen der Module 2 zu definieren, ist es vorteilhaft, wenn eine Abdichtung zwischen den Latentwärmespeichermodulen 2 und der transparenten Abdeckung 12 (siehe Figur 2) vorliegt, die verhindert, dass das Arbeitsmedium in unerwünschter Weise vom vorgesehenen Pfad abweicht. Um diese Abdichtung zu bewirken, ist im Gehäuse 21 des Latentwärmespeichermoduls 2 in der Figur 6 eine Nut 28 vorgesehen, in die ein Abdichtungselement 29, beispielsweise eine Gummilippe, eingesetzt werden kann. Das Abdichtungselement 29 kann auch als Auflage für die transparente Abdeckung 12 dienen und diese stabilisieren, insbesondere wenn das Fassadenelement geneigt am Gebäude befestigt ist und sich dadurch das Abdichtungselement "unter" der transparenten Abdeckung befindet.

Die Module 2 der Figuren 5 und 6 unterscheiden sich auch im Latentwärmespeichermaterial 26, mit dem die Module 2 gefüllt sind. Auch ein zum Heizen vorgesehenes Latentwärmespeichermodul wird vorzugsweise mit einem Salzhydrat oder Paraffin als Phasenwechselmaterial gefüllt. Vorzugsweise liegt die Phasenübergangstemperatur des Phasenwechselmaterials oberhalb der gewünschten Raumtemperatur im Winter (bevorzugt 32°C oder höher).

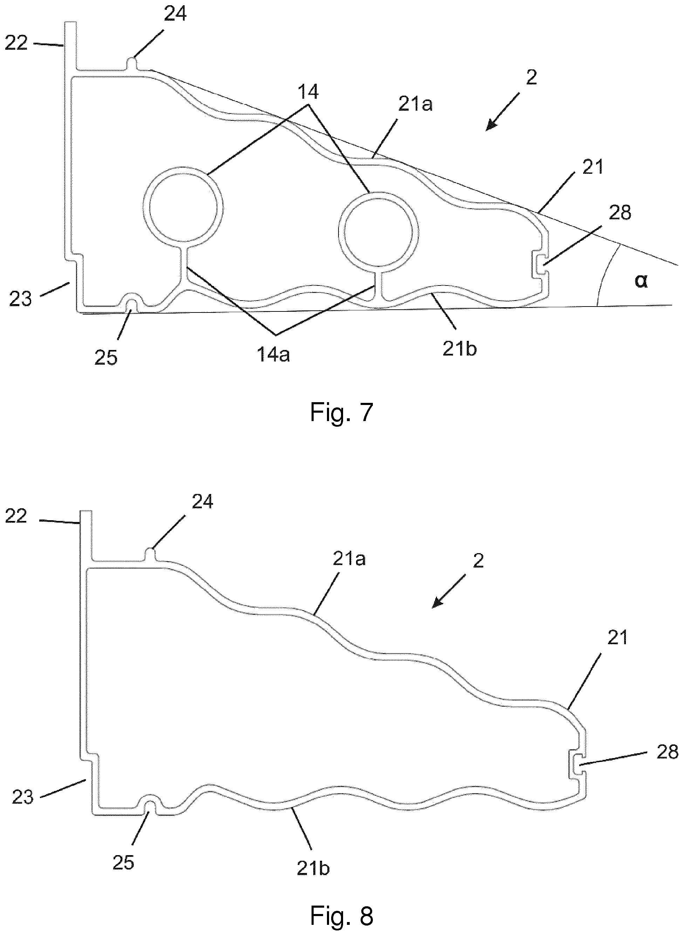

In den Figuren 7 und 8 sind jeweils eine weitere bevorzugte Ausführungsform eines Latentwärmespeichermoduls 2 gemäß der vorliegenden Erfindung, das zum Kühlen bzw. Heizen eines Gebäudes verwendet werden kann, als Schnittzeichnung gezeigt. Im Wesentlichen entspricht die Darstellung in den Figuren 7 und 8 der Darstellung in den Figuren 5 und 6, so dass auf eine Wiederholung der entsprechenden Merkmale verzichtet wird. Allerdings ist in den Figuren 7 und 8 das Latentwärmespeichermaterial nicht dargestellt.

Der wesentliche Unterschied zwischen den Latentwärmespeichermodulen 2 der Figuren 7 und 8 und den entsprechenden Modulen 2 der Figuren 5 und 6 liegt darin, dass die Oberseite 21a und die Unterseite 21b des Gehäuses 21 nicht gefaltet, sondern gewellt ausgeführt sind. Hierdurch werden ebenfalls eine Vergrößerung der Oberfläche des Gehäuses 21 sowie eine Versteifung desselben bewirkt. Diese Form der Oberfläche ermöglicht auch eine bessere Kompensation der Volumenausdehnung des Phasenwechselmaterials, womit es möglich wird, auch ohne Gaspolster im Inneren des Gehäuses 21 auszukommen und dieses vollständig mit dem Phasenwechselmaterial zu füllen.

In Figur 9 ist dargestellt, wie mehrere Latentwärmespeichermodule 2 in einen Kühlflügel eingebaut sind. Der dargestellte Kühlflügel weist einen Trägerrahmen 1 mit einer Befestigungsplatte 11 auf. Entlang der Befestigungsplatte 11 ist ein Wärmedämmmaterial 13 angeordnet. Hierdurch wird die thermische Isolation des Gebäudes verbessert, wenn der Kühlflügel an das Gebäude angeklappt ist. Gleichzeitig wird der Wärmeverlust der in den Latentspeichermodulen 2 gespeicherten Wärme verringert. An der Befestigungsplatte 11 ist zuunterst ein Abstützungselement 30 angebracht. Das Abstützungselement 30 ist im Wesentlichen ein Winkelelement, das mit einer Befestigungsseite 32 an der Befestigungsplatte 11 (beispielsweise mittels einer Schraube 31) montiert werden kann. Die andere Seite des Winkelelements weist einen Vorsprung 34 auf, der in die entsprechende Aussparung 25 an der Unterseite eines Latentwärmespeichermoduls 2 eingreifen kann.

Es ist weiterhin dargestellt, wie ein erstes Latentwärmespeichermodul 2 auf dem Abstützungselement 30 aufliegt und selbst wiederum (beispielsweise mittels einer Schraube 31 durch den Befestigungsabschnitt 22 des Gehäuses 21) an der Befestigungsplatte 11 montiert ist. Ein weiteres Latentwärmespeichermodul 2 liegt auf dem ersten Latentwärmespeichermodul 2 auf, so dass der Vorsprung 24 an der Oberseite des ersten Moduls 2 in die entsprechende Aussparung 25 an der Unterseite des weiteren Moduls 2 einhakt. Das weitere Latentwärmespeichermodul 2 ist selbst wiederum entsprechend dem ersten Modul 2 an der Befestigungsplatte 11 montiert. Ebenso sind die weiteren Latentwärmespeichermodule 2 im Fassadenelement befestigt.

Um die thermische Isolation des Gebäudes bei geschlossenem (angeklapptem) Fassadenelement weiter zu erhöhen, ist am Trägerrahmen 1 des Fassadenelements ein Dichtelement 35 (beispielsweise eine Gummidichtung) vorgesehen.

Der Kühlflügel ist auf der der Befestigungsplatte 11 gegenüberliegenden Seite offen, um (bei weggeklapptem) Flügel eine gute Wärmeabgabe durch Konvektion und Strahlung an die Umgebung zu gewährleisten.

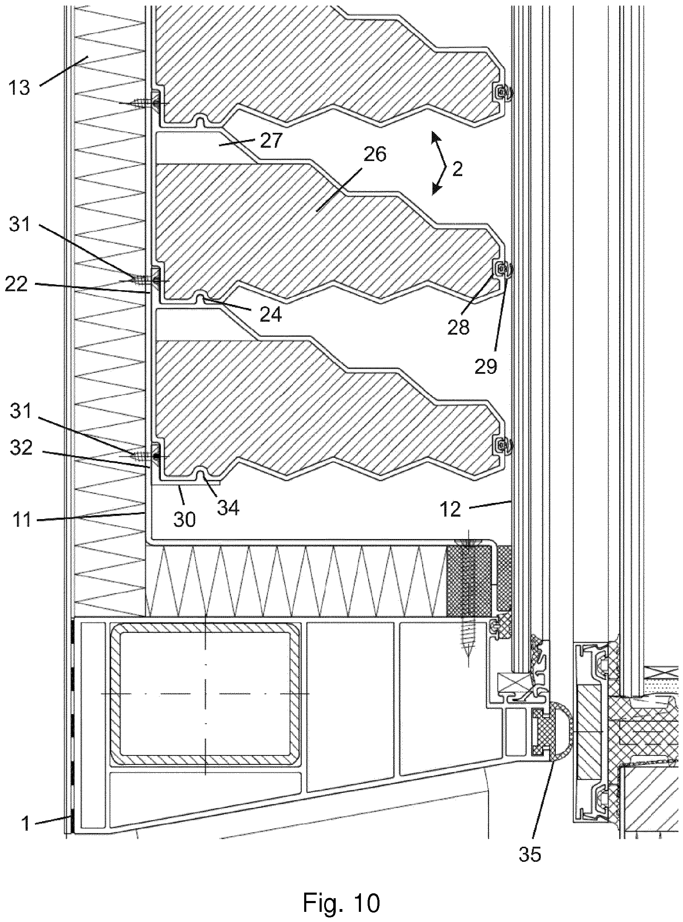

Entsprechend zu Figur 9 ist in Figur 10 dargestellt, wie mehrere Latentwärmespeichermodule 2 in einem Heizflügel eingebaut sind. Gemeinsamkeiten zwischen beiden Darstellungen werden wiederum nicht wiederholt. Der Heizflügel der Figur 10 weist gegenüber dem Kühlflügel in Figur 9 eine transparente Abdeckung 12 (wie oben bereits beschrieben) auf. Durch diese Abdeckung 12 wird bei geöffnetem Flügel der Wärmeverlust durch Konvektion verringert. Außerdem ermöglicht es diese Abdeckung 12, einen Pfad 7 (d.h. eine Leitungsanordnung) für das Arbeitsmedium durch die Anordnung der Latentwärmespeichermodule 7 im Heizflügel zu definieren, wie ebenfalls bereits oben beschrieben wurde. Hierzu erfolgt vorzugsweise eine gute Abdichtung der Latentwärmespeichermodule 2 gegenüber der transparenten Abdeckung 12. Diese erfolgt mit Abdichtungselementen 29 (beispielsweise mit Gummilippen), die in eine passende Nut 28 im Gehäuse 21 der Latentwärmespeichermodule 2 eingesetzt werden.

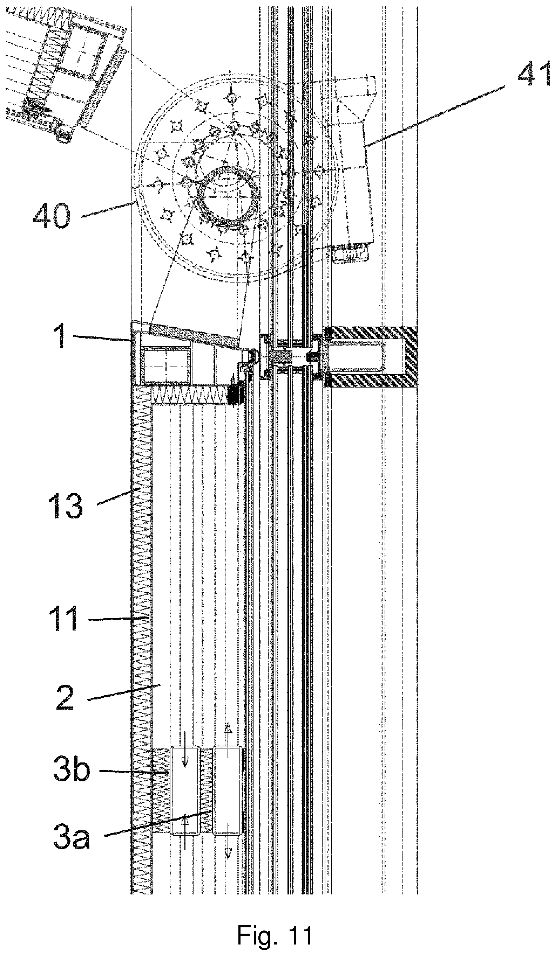

In Figur 11 ist ein horizontaler Schnitt durch eine bevorzugte Ausführungsform eines erfindungsgemäßen Fassadenelements dargestellt, und zwar sowohl in einer an das Gebäude angeklappten Position, als auch in einer vom Gebäude weggeklappten Position (gestrichelt). Das Fassadenelement ist mittels einer Drehachse 40 am Gebäude drehbar befestigt. Die Drehung der Achse 40 erfolgt mittels eines Motors 41.

In der horizontalen Schnittdarstellung des Fassadenelements gemäß Figur 11 ist wiederum das "außen" am Fassadenelement sowie an dessen Seiten angeordnete Wärmedämmmaterial 13 zu erkennen. Weiterhin sind in Figur 11 die zentrale Zuleitung 3a und die zentrale Ableitung 3b für das Arbeitsmedium gezeigt. Das Arbeitsmedium tritt vorzugsweise an mehreren Stellen in unterschiedlichen Höhen aus der zentralen Zuleitung 3a aus und durchströmt bzw. umströmt die Latentwärmespeichermodule 2, bevor es in die zentrale Ableitung 3b eintritt.

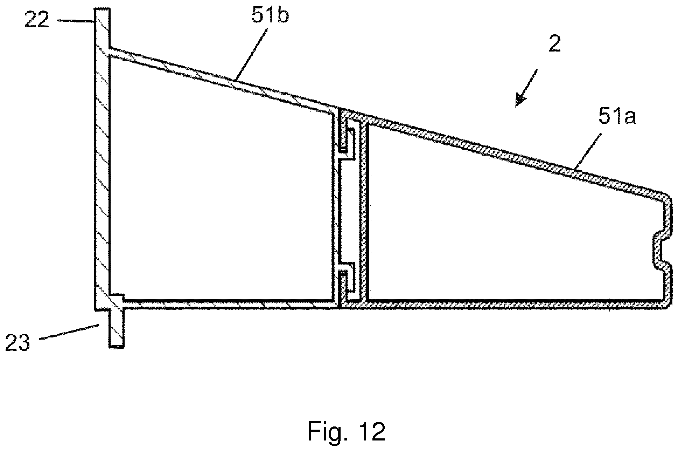

In Figur 12 ist ein Schnitt durch eine weitere bevorzugte Ausführungsform eines Latentwärmespeichermoduls 2 gezeigt. Das Gehäuse dieses Moduls besteht aus zwei Abschnitten 51a, 51b, die miteinander verbunden werden können. Dadurch ist es beispielsweise möglich, auch Latentwärmespeichermodule 2 mit großer Breite herzustellen. Die Befestigung der in Figur 12 gezeigten Ausführungsform an einer Befestigungsplatte des Trägerrahmens erfolgt wie bei den in den Figuren 5-8 dargestellten Ausführungsformen. Die hier dargestellte Ausführungsform weist eine im Wesentlichen flache Oberseite und Unterseite auf, die ebenfalls nicht parallel sind, sondern einen Winkel einschließen.

Es ist auch vorgesehen, in weiteren bevorzugten Ausführungsformen das Merkmal der Ausbildung des Gehäuses aus zwei miteinander verbindbaren Abschnitten mit den Merkmalen der Ausführungsformen der Figuren 5-8 (insbesondere die gewellten bzw. gefalteten Oberflächen) zu kombinieren.

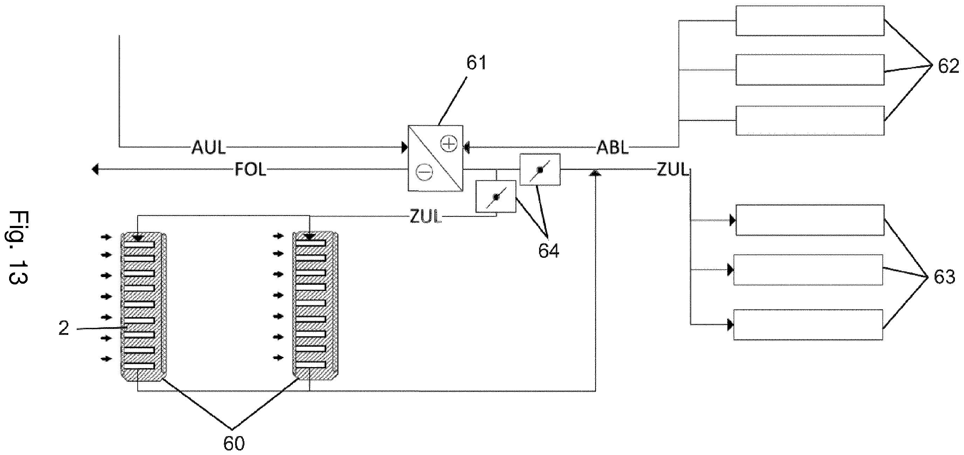

Figur 13 zeigt beispielhaft die Einbindung von zwei Heizflügeln 60 in die Heizungsanlage eines Gebäudes. Die beiden Heizflügel 60 sind hier nur schematisch dargestellt. Die Heizungsanlage ist im Wesentlichen eine aktive Lüftung, bei der die Außenluft in einem Wärmeübertrager 61 durch Übertragung der Wärmeenergie der Abluft, die aus bestimmten Räumen des Gebäudes entnommen wird, vorzugsweise aus Nutzräumen 62 wie Küche und Bad, auf die Zuluft erwärmt wird. Die erwärmte Luft kann dann bestimmten Räumen des Gebäudes, vorzugsweise Wohn- und Schlafräumen 63, zugeführt werden. Um die Heizflügel 60 in die Heizungsanlage zu integrieren, sind Klappen 64 im Lüftungssystem vorgesehen, die es erlauben, zumindest einen Teil der Zuluft nach dem Wärmeübertrager 61 zu den Heizflügeln 60 zu führen. Die Zuluft wird dann durch die Heizflügel 60 geführt und umströmt dort die Latentwärmespeichermodule 2 und nimmt von diesen Wärme auf. Anschließend wird die erwärmte Luft wieder in das Zuluftsystem der Heizungsanlage eingespeist.

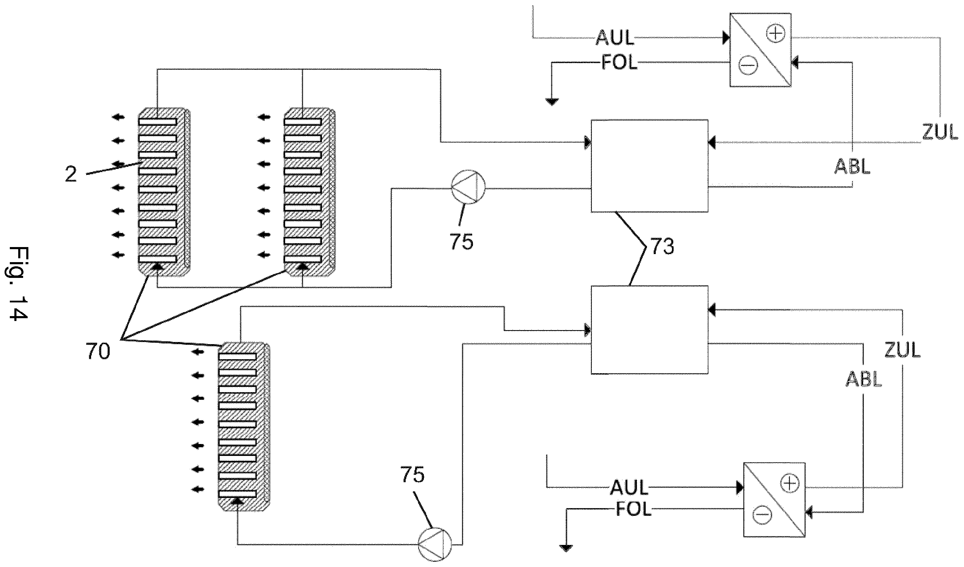

Figur 14 zeigt die Einbindung von drei Kühlflügeln 70 in die Lüftungsanlage eines Gebäudes. Die Kühlflügel 70 sind hier nur schematisch dargestellt. Um eine Kühlung der Raumluft zu bewirken, wird die Raumluft den zu kühlenden Räumen 73 (beispielsweise Wohn- und Schlafräumen) entnommen und (direkt) zu den Kühlflügeln 70 geführt. Diese Luft wird dann durch die Kühlflügel 70 geführt und durchströmt dabei die Latentwärmespeichermodule 2, an die sie Wärme abgibt. Die abgekühlte Luft wird dann wieder den zu kühlenden Räumen 73 zugeführt. Die Bewegung der Luft zu den Kühlflügeln 70, durch diese hindurch und wieder zurück in die Räume wird mittels Ventilatoren 75 bewirkt.

In den Figuren 13 und 14 bezeichnet AUL die dem Gebäude zugeführte Außenluft, ZUL die Zuluft nach dem Wärmeübertrager, ABL die Abluft, die manchen Räumen des Gebäudes entnommen und zum Wärmetauscher geführt wird, und FOL die Fortluft, d.h. die Abluft, die, nachdem ihre Wärmeenergie im Wärmeübertrager auf die Zuluft übertragen wurde, aus dem Gebäude entfernt wird.

Vorstehend wurden bestimmte Ausführungsformen der Fassadenelemente und der Latentwärmespeichermodule jeweils im Hinblick auf die Verwendung zum Heizen oder Kühlen eines Gebäudes beschrieben. Jedoch hängt die Verwendung nicht von der mechanischen Konstruktion des Fassadenelements bzw. Moduls ab, sondern vom darin verwendeten Latentwärmespeichermaterial. Daher können die oben dargestellten Fassadenelemente und Module je nach Latentwärmespeichermaterial sowohl zum Heizen als auch zum Kühlen verwendet werden. Insbesondere können Fassadenelemente mit einer transparenten Abdeckung auch zum Kühlen und Fassadenelemente ohne eine solche Abdeckung auch zum Heizen verwendet werden. Weiter können Latentwärmespeichermodule mit innen geführten Leitungen auch zum Heizen und Module ohne solche Leitungen auch zum Kühlen verwendet werden.

Es ist insbesondere auch vorgesehen, Fassadenelemente sowohl mit Latentwärmespeichermodulen zum Heizen als auch mit Modulen zum Kühlen auszustatten, sodass ein solches Fassadenelement für beide Verwendungen eingesetzt werden kann. Vorzugsweise haben solche gemischten Fassadenelemente getrennte Leitungsanordnungen für das Arbeitsmedium, eine erste Leitungsanordnung für die Verwendung zum Heizen und eine zweite Leitungsanordnung für die Verwendung zum Kühlen. Es kann aber auch nur eine einzelne Leitungsanordnung vorgesehen sein, durch die das Arbeitsmedium dann sowohl die aktiven als auch die inaktiven Module umströmt bzw. durchströmt.

Die vorliegende Erfindung ist nicht auf die oben dargestellten Ausführungsbeispiele beschränkt, sondern wird durch die nachfolgenden Ansprüche definiert. Insbesondere wird der Fachmann auch Kombinationen von Merkmalen der einzelnen Ausführungsbeispiele in Betracht ziehen, sofern diese technisch sinnvoll sind.

### Bezuaszeichenliste

- 1: Trägerrahmen
- 2: Latentwärmespeichermodul
- 3a: Zentrale Zuleitung
- 3b: Zentrale Ableitung
- 4: Einlass/Auslass
- 5: Austrittsöffnung in der zentralen Zuleitung
- 6: Eintrittsöffnung in der zentralen Ableitung
- 7: Pfad für das Arbeitsmedium
- 11: Befestigungsplatte
- 12: Transparente Abdeckung
- 13: Wärmedämmmaterial
- 14: Leitung durch das Latentwärmespeichermodul
- 14a: Steg
- 21: Gehäuse
- 21a: Oberseite des Gehäuses
- 21b: Unterseite des Gehäuses
- 22: Befestigungsabschnitt
- 23: Aussparung für Befestigungsabschnitt
- 24: Vorsprung
- 25: Aussparung für Vorsprung
- 26: Latentwärmespeichermaterial
- 27: Ungefülltes Restvolumen
- 28: Nut
- 29: Abdichtungselement
- 30: Abstützungselement
- 31: Schraube
- 32: Befestigungsabschnitt des Abstützungselements
- 34: Vorsprung des Abstützungselements
- 35: Dichtelement
- 40: Scharnier
- 41: Motor
- 51a: erster Gehäuseabschnitt
- 51b: zweiter Gehäuseabschnitt
- 60: Heizflügel
- 61: Wärmeübertrager
- 62: Nutzraum
- 63: Wohn-/Schlafraum
- 64: Klappe im Lüftungssystem
- 70: Kühlflügel
- 73: zu kühlender Raum
- 75: Ventilator

## Patentansprüche

1. Fassadenelement zum Klimatisieren eines Gebäudes mit einem Arbeitsmedium, wobei das Fassadenelement aufweist:
einen Trägerrahmen (1),
eine Mehrzahl von mit dem Trägerrahmen verbundenen Latentwärmespeichermodulen (2), die mindestens ein Latentwärmespeichermaterial (26) enthalten, und
eine Leitungsanordnung (3a, 3b) für das Arbeitsmedium,
**dadurch gekennzeichnet, dass**
die Leitungsanordnung (3a, 3b) einen Einlass und einen Auslass (4) für das Arbeitsmedium umfasst, die nebeneinander angeordnet sind, und die Leitungsanordnung (3a, 3b) so gestaltet ist, dass das Arbeitsmedium die Latentwärmespeichermodule (2) umströmen und/oder durchströmen kann, und
wobei das Fassadenelement weiterhin ein oder mehrere Befestigungsmittel zur drehbaren Befestigung des Fassadenelements an einem Gebäude aufweist, um das Fassadenelement je nach Bedarf vom Gebäude wegklappen oder an das Gebäude anklappen zu können.

2. Fassadenelement nach Anspruch 1, wobei die Befestigungsmittel eine fassadenintegrierte und/oder eine von der Fassade abstehende Befestigung des Fassadenelements am Gebäude erlauben.

3. Fassadenelement nach einem der vorangegangenen Ansprüche, wobei das Fassadenelement ein Wärmedämmmaterial (13) aufweist, das entlang mindestens einer Oberfläche des Fassadenelements angeordnet ist.

4. Fassadenelement nach einem der vorangegangenen Ansprüche, wobei das Fassadenelement eine für sichtbares Licht und/oder für Infrarotstrahlung transparente Abdeckung (12), vorzugsweise aus Glas, aufweist, die vorzugsweise mit dem Trägerrahmen (1) im Wesentlichen dicht für das Arbeitsmedium, insbesondere luftdicht, verbunden ist.

5. Fassadenelement nach Anspruch 4 wobei die Latentwärmespeichermodule (2) gegen die transparente Abdeckung (12) im Wesentlichen dicht für das Arbeitsmedium, insbesondere luftdicht, abgedichtet sind.

6. Fassadenelement nach Anspruch 5, wobei die Latentwärmespeichermodule (2) so angeordnet sind, dass zwischen Trägerrahmen (1) und transparenter Abdeckung (2) die Leitungsanordnung (3a, 3b) für das Arbeitsmedium gebildet wird, sodass mindestens eine durchgängige Verbindung für das Arbeitsmedium (7) vom Einlass (4) zum Auslass (4) gebildet wird, bei der das Arbeitsmedium die Latentwärmespeichermodule (2) umströmt.

7. Fassadenelement nach einem der vorangegangenen Ansprüche, wobei der Trägerrahmen (1) aus Metall (insbesondere Stahl und/oder Aluminium), Beton, Holz, Polymermaterial, Polymerverbundmaterial oder aus einer Kombination dieser Materialien besteht.

8. Fassadenelement nach einem der vorangegangenen Ansprüche, wobei mindestens ein Latentwärmespeichermodul (2) als Latentwärmespeichermaterial (26) ein Phasenübergangsmaterial mit einer Phasenübergangstemperatur im Bereich zwischen ungefähr 28°C und ungefähr 35°C, bevorzugt von ungefähr 32°C aufweist.

9. Fassadenelement nach einem der vorangegangenen Ansprüche, wobei mindestens ein Latentwärmespeichermodul (2) als Latentwärmespeichermaterial (26) ein Phasenübergangsmaterial mit einer Phasenübergangstemperatur im Bereich zwischen ungefähr 18°C und ungefähr 25°C, bevorzugt von ungefähr 21°C aufweist.

10. Fassadenelement nach einem der vorangegangenen Ansprüche, wobei jedes der Mehrzahl von Latentwärmespeichermodulen (2) ein Gehäuse (21) mit einer Oberseite (21a) und einer Unterseite (21b), das zumindest teilweise mit einem Latentwärmespeichermaterial (26) gefüllt ist, und Befestigungselemente zur Befestigung des Latentwärmespeichermoduls (2) an einem Trägerelement (1) des Fassadenelements aufweist, wobei das Gehäuse (21) ein Profilelement aus Metall, insbesondere Aluminium, Kupfer und/oder Stahl, aus Kunststoff, insbesondere Polypropylen, Polyethylen und/oder Polyvinylchlorid, aus Glas oder aus einer Kombination aus diesen Materialien aufweist.

11. Fassadenelement nach Anspruch 10, wobei die Oberseite (21a) und die Unterseite (21b) eines jeden der Mehrzahl von Latentwärmespeichermodulen (2) im Wesentlichen einen Winkel, bevorzugt einen Winkel zwischen ungefähr 5° und ungefähr 85°, weiter bevorzugt einen Winkel zwischen ungefähr 15° und ungefähr 50°, besonders bevorzugt einen Winkel von ungefähr 20° einschließen.

12. Fassadenelement nach einem der Ansprüche 10-11, wobei die Oberseite (21a) und/oder die Unterseite (21b) eines jeden der Mehrzahl von Latentwärmespeichermodulen (2) gewellt und/oder gefaltet ist.

13. Fassadenelement nach einem der Ansprüche 10-12, wobei jedes der Mehrzahl von Latentwärmespeichermodulen (2) weiter Versteifungselemente, insbesondere längliche Stege (14a), bevorzugt im Inneren des Gehäuses (21) aufweist.

14. Fassadenelement nach einem der Ansprüche 10-13, weiter aufweisend mindestens eine Leitung (14) für ein Arbeitsmedium in jedem der Mehrzahl von Latentwärmespeichermodulen (2).

15. Fassadenelement nach Anspruch 14, wobei die Leitung (14) im Inneren des Gehäuses (21) verläuft und bevorzugt mit einer Wand des Gehäuses (21) verbunden ist, besonders bevorzugt ortsfest verbunden ist.

16. Fassadenelement nach einem der vorangegangenen Ansprüche, wobei das Latentwärmespeichermaterial (26) ein Salzhydrat, ein Paraffin, eine Fettsäure oder eine Kombination aus diesen Materialien aufweist.

17. Fassadenelement nach einem der vorangegangenen Ansprüche, wobei das Latentwärmespeichermaterial (26) zusätzliche Trägerstoffe wie Aluminiumschaum, Kohlenstoffnanoröhren, Graphitflakes, Metallschäume oder eine Kombination dieser Stoffe aufweist.

18. Verfahren zum Klimatisieren eines Gebäudes mit mindestens einem Fassadenelement nach einem der Ansprüche 1-17, wobei ein Arbeitsmedium durch das Fassadenelement und danach zum Gebäude strömt, um Wärme/Kälte zwischen dem Gebäude und den Latentwärmespeichermodulen (2) des Fassadenelements auszutauschen.

19. Verfahren nach Anspruch 18, wobei das Arbeitsmedium vom Gebäude zum Fassadenelement geleitet wird.

20. Verfahren nach Anspruch 18, wobei das Arbeitsmedium von außerhalb des Gebäudes in das Fassadenelement geleitet wird.

21. Verfahren nach einem der Ansprüche 18-20, wobei das Fassadenelement je nach Bedarf vom Gebäude weg geklappt oder an das Gebäude angeklappt wird.

22. Verfahren nach einem der Ansprüche 18-21, wobei die Position des Fassadenelements so eingestellt wird, dass die Sonneneinstrahlung auf die Latentwärmespeichermodule (2) maximiert wird.

23. Verfahren nach einem der Ansprüche 18-22, wobei einer oder mehrere der Parameter Sonnenstand, Intensität der Sonnenstrahlung, Windgeschwindigkeit, Außenlufttemperatur, Raumlufttemperatur, Temperatur des Latentwärmespeichermaterials (26) ermittelt und für die Bestimmung der Position des Fassadenelements berücksichtigt werden.

24. Verfahren nach einem der Ansprüche 18-23, wobei das Fassadenelement tagsüber und/oder wenn die Intensität der Sonnenstrahlung einen vorbestimmten Wert überschreitet vom Gebäude weggeklappt wird, um Sonnenenergie im Latentwärmespeichermaterial (26) zu speichern, und über Nacht und/oder wenn die Intensität der Sonnenstrahlung einen vorbestimmten Wert unterschreitet an das Gebäude angeklappt wird.

25. Verfahren nach einem der Ansprüche 18-24, wobei das Arbeitsmedium Luft ist und wobei das Arbeitsmedium zunächst durch das Fassadenelement geführt wird, um Wärme von den Latentwärmespeichermodulen (2) aufzunehmen, und dann einer Luftzufuhrverteilung des Gebäudes und/oder mindestens einem Raum des Gebäudes zugeführt wird.

26. Verfahren nach einem der Ansprüche 18-23, wobei das Fassadenelement über Nacht und/oder wenn die Außenlufttemperatur einen vorbestimmten Wert unterschreitet vom Gebäude weggeklappt wird, um im Latentwärmespeichermaterial (26) gespeicherte Wärmeenergie durch Strahlung und/oder Konvektion abzugeben, und tagsüber und/oder wenn die Außenlufttemperatur einen vorbestimmten Wert überschreitet an das Gebäude angeklappt wird.

27. Verfahren nach einem der Ansprüche 18-23 und 26, wobei das Arbeitsmedium Luft ist und wobei das Arbeitsmedium zunächst der Luftabfuhrverteilung des Gebäudes und/oder mindestens einem Raum des Gebäudes entnommen wird und dann durch das Fassadenelement geführt wird, um Wärme an die Latentwärmespeichermodule (2) abzugeben.

## Claims

1. Facade element for climatizing a building with a working medium, wherein the façade element comprises:
a support frame (1),
a plurality of latent heat storage devices (2) connected to the support frame, which contain at least one latent heat storage material (26), and
a line arrangement (3a, 3b) for the working medium,
**characterised in that**
the line arrangement (3a, 3b) comprises an inlet and an outlet (4) for the working medium, which are arranged adjacent to each other, and the line arrangement (3a, 3b) is designed such that the working medium can flow around and/or flow through the latent heat storage devices (2), and
wherein the façade element further has one or more fastening means for rotatably attaching the façade element to a building, in order to allow the façade element to be folded away from or folded against the building, as necessary.

2. Façade element according to claim 1, wherein the fastening means allow the façade element to be attached to the building integrated into the façade and/or protruding from the facade.

3. Façade element according to any of the preceding claims, wherein the façade element has an insulating material (13), which is arranged along at least one surface of the façade element.

4. Façade element according to any of the preceding claims, wherein the façade element has a cover (12), preferably made from glass, which is transparent to visible light and/or to infrared radiation, which is preferably connected to the support frame (1) in a substantially tight manner for the working medium, in particular airtight.

5. Façade element according to claim 4, wherein the latent heat storage devices (2) are sealed against the transparent cover (12) in a substantially tight manner for the working medium, in particular airtight.

6. Façade element according to claim 5, wherein the latent heat storage devices (2) are arranged such that the line arrangement (3a, 3b) for the working medium is formed between the support frame (1) and the transparent cover (2), such that at least one continuous connection for the working medium (7) is formed from the inlet (4) to the outlet (4), in which the working medium flows around the latent heat storage devices (2).

7. Façade element according to any of the preceding claims, wherein the support frame (1) is made of metal (in particular steel and/or aluminium), concrete, wood, polymer material, polymer composite material or of a combination of these materials.

8. Façade element according to any of the preceding claims, wherein at least one latent heat storage device (2) has a phase change material with a phase change temperature in a range of between approximately 28°C and approximately 35°C, preferably approximately 32°C, as a latent heat storage material (26).

9. Façade element according to any of the preceding claims, wherein at least one latent heat storage device (2) has a phase change material with a phase change temperature in a range of between approximately 18°C and approximately 25°C, preferably approximately 21°C, as a latent heat storage material (26).

10. Façade element according to any of the preceding claims, wherein each of the plurality of latent heat storage devices (2) has a housing (21) with a top (21a) and a bottom (21b), which is at least partially filled with a latent heat storage material (26), and fastening means for attaching the latent heat storage device (2) to a support frame (1) of the façade element, wherein the housing (21) comprises a profile element made from metal, in particular aluminium, copper and/or steel, from a synthetic material, in particular polypropylene, polyethylene and/or polyvinyl chloride, from glass or from a combination of these materials.

11. Façade element according to claim 10, wherein the top (21a) and the bottom (21b) of each of the plurality of latent heat storage devices (2) substantially include an angle, preferably an angle of between approximately 5° and approximately 85°, more preferably an angle of between approximately 15° and approximately 50° and even more preferably an angle of approximately 20°.

12. Façade element according to any one of the claims 10-11, wherein the top (21a) and/or the bottom (21b) of each of the plurality of latent heat storage devices (2) is corrugated and/or folded.

13. Façade element according to any one of the claims 10-12, wherein each of the plurality of latent heat storage devices (2) further has stiffening elements, in particular elongated rods (14a), preferably inside the housing (21).

14. Façade element according to any one of the claims 10-13, further having at least one line (14) for a working medium in each of the plurality of latent heat storage devices (2).

15. Façade element according to claim 14, wherein the line (14) runs inside the housing (21) and is preferably connected to a wall of the housing (21), more preferably immovably connected.

16. Façade element according to any of the preceding claims, wherein the latent heat storage material (26) comprises a salt hydrate, a paraffin, a fatty acid or a combination of these materials.

17. Façade element according to any of the preceding claims, wherein the latent heat storage material (26) comprises additional carriers such as aluminium foam, carbon nanotubes, graphite flakes, metal foams or a combination of these substances.

18. Method for climatizing a building with at least one façade element according to any one of claims 1-17, wherein a working medium flows through the façade element and then to the building, in order to exchange heat/cold between the building and the latent heat storage devices (2) of the façade element.

19. Method according to claim 18, wherein the working medium is conducted from the building to the façade element.

20. Method according to claim 18, wherein the working medium is conducted from outside the building into the façade element.

21. Method according to any one of claims 18-20, wherein the façade element is folded away from the building or folded against the building, as necessary.

22. Method according to any one of claims 18-21, wherein the position of the façade element is adjusted such that the sunlight on the latent heat storage device (2) is maximised.

23. Method according to any one of claims 18-22, wherein one or more of the parameters position of the sun, intensity of sunlight, wind speed, outside air temperature, indoor air temperature, temperature of the latent heat storage material (26) are determined and factored in when determining the position of the façade element.

24. Method according to any one of claims 18-23, wherein the façade element is folded away from the building during the day and/or when the intensity of sunlight exceeds a predetermined value, in order to store solar energy in the latent heat storage material (26), and is folded against the building during the night and/or when the intensity of sunlight falls below a predetermined value.

25. Method according to any one of claims 18-24, wherein the working medium is air and wherein the working medium is first conducted through the façade element, in order to absorb heat from the latent heat storage devices (2), and is then fed into an air supply distribution system for the building and/or to at least one room of the building.

26. Method according to any one of claims 18-23, wherein the façade element is folded away from the building during the night and/or when the outside air temperature falls below a predetermined value, in order to release the thermal energy stored in the latent heat storage material (26) by radiation and/or convection, and is folded against the building during the day and/or when the outside air temperature exceeds a predetermined value.

27. Method according to any one of claims 18-23 and 26, wherein the working medium is air and wherein the working medium is first removed from the air extraction distribution system for the building and/or from at least one room of the building and is then conducted through the facade element, in order to deliver heat to the latent heat storage devices (2).

## Revendications

1. Elément de façade pour la climatisation d'un bâtiment avec un fluide de travail, dans lequel l'élément de façade comporte :
un cadre porteur (1),
une pluralité de modules d'accumulateur de chaleur latente (2) reliés au cadre porteur qui contiennent au moins un matériau d'accumulateur de chaleur latente (26), et
un agencement de conduite (3a, 3b) pour le fluide de travail,
**caractérisé en ce que**
l'agencement de conduite (3a, 3b) comporte une entrée et une sortie (4) pour le fluide de travail qui sont agencées l'une à côté de l'autre, et l'agencement de conduite (3a, 3b) est conçu de sorte que le fluide de travail puisse contourner et/ou traverser les modules d'accumulateur de chaleur latente (2), et
dans lequel l'élément de façade comporte en outre un ou plusieurs moyens de fixation pour la fixation rotative de l'élément de façade au niveau d'un bâtiment afin de pouvoir si besoin relever l'élément de façade du bâtiment ou le replier sur le bâtiment.

2. Elément de façade selon la revendication 1, dans lequel les moyens de fixation permettent une fixation intégrée dans la façade et/ou une fixation dépassant de la façade de l'élément de façade au bâtiment.

3. Elément de façade selon l'une quelconque des revendications précédentes, dans lequel l'élément de façade comporte un matériau thermosisolant (13) qui est agencé le long d'au moins une surface de l'élément de façade.

4. Elément de façade selon l'une quelconque des revendications précédentes, dans lequel l'élément de façade comporte un recouvrement (12) transparent à la lumière visible et/ou au rayonnement infrarouge, de préférence en verre, qui est relié de préférence au cadre porteur (1) de manière sensiblement étanche pour le fluide de travail, en particulier étanche à l'air.

5. Elément de façade selon la revendication 4, dans lequel les modules d'accumulateur de chaleur latente (2) sont rendus étanches contre le recouvrement (12) transparent de manière sensiblement étanche pour le fluide de travail, en particulier étanche à l'air.

6. Elément de façade selon la revendication 5, dans lequel les modules d'accumulateur de chaleur latente (2) sont agencés de sorte que l'agencement de conduite (3a, 3b) pour le fluide de travail soit formé entre le cadre porteur (1) et le recouvrement (2) transparent de sorte qu'au moins une liaison continue pour le fluide de travail (7) soit formée de l'entrée (4) à la sortie (4), pour laquelle le fluide de travail contourne les modules d'accumulateur de chaleur latente (2).

7. Elément de façade selon l'une quelconque des revendications précédentes, dans lequel le cadre porteur (1) se compose de métal (en particulier d'acier et/ou d'aluminium), de béton, de bois, de matériau polymère, de matériau composite de polymère ou d'une combinaison de ces matériaux.

8. Elément de façade selon l'une quelconque des revendications précédentes, dans lequel au moins un module d'accumulateur de chaleur latente (2) comporte comme matériau d'accumulateur de chaleur latente (26) un matériau de transition de phase avec une température de transition de phase dans la plage entre environ 28 °C et environ 35 °C, de préférence d'environ 32 °C.

9. Elément de façade selon l'une quelconque des revendications précédentes, dans lequel au moins un module d'accumulateur de chaleur latente (2) comporte comme matériau d'accumulateur de chaleur latente (26) un matériau de transition de phase avec une température de transition de phase dans la plage entre environ 18 °C et environ 25 °C, de préférence d'environ 21 °C.

10. Elément de façade selon l'une quelconque des revendications précédentes, dans lequel chacun de la pluralité de modules d'accumulateur de chaleur latente (2) comporte un boîtier (21) avec un côté supérieur (21a) et un côté inférieur (21b) qui est rempli au moins partiellement avec un matériau d'accumulateur de chaleur latente (26), et des éléments de fixation pour la fixation du module d'accumulateur de chaleur latente (2) à un élément porteur (1) de l'élément de façade, dans lequel le boîtier (21) comporte un élément profilé en métal, en particulier en aluminium, en cuivre et/ou en acier, en matière plastique, en particulier en polypropylène, en polyéthylène et/ou en chlorure de polyvinyle, en verre ou en une combinaison de ces matériaux.

11. Elément de façade selon la revendication 10, dans lequel le côté supérieur (21a) et le côté inférieur (21b) d'un chacun de la pluralité de modules d'accumulateur de chaleur latente (2) forment sensiblement un angle, de préférence un angle entre environ 5° et environ 85°, de manière encore préférée un angle entre environ 15° et environ 50°, de manière particulièrement préférée un angle d'environ 20°.

12. Elément de façade selon l'une quelconque des revendications 10 à 11, dans lequel le côté supérieur (21a) et/ou le côté inférieur (21b) d'un chacun de la pluralité de modules d'accumulateur de chaleur latente (2) est ondulé et/ou plié.

13. Elément de façade selon l'une quelconque des revendications 10 à 12, dans lequel chacun de la pluralité de modules d'accumulateur de chaleur latente (2) comporte en outre des éléments de renforcement, en particulier des nervures oblongues (14a), de préférence à l'intérieur du boîtier (21).

14. Elément de façade selon l'une quelconque des revendications 10 à 13, comportant en outre au moins une conduite (14) pour un fluide de travail dans chacun de la pluralité de modules d'accumulateur de chaleur latente (2).

15. Elément de façade selon la revendication 14, dans lequel la conduite (14) s'étend à l'intérieur du boîtier (21) et est de préférence reliée à une paroi du boîtier (21), de manière particulièrement préférée est reliée fixement.

16. Elément de façade selon l'une quelconque des revendications précédentes, dans lequel le matériau d'accumulateur de chaleur latente (26) comporte un hydrate salin, une paraffine, un acide gras ou une combinaison de ces matériaux.

17. Elément de façade selon l'une quelconque des revendications précédentes, dans lequel le matériau d'accumulateur de chaleur latente (26) comporte des substances porteuses supplémentaires telles que de la mousse d'aluminium, des nanotubes de carbone, des paillettes de graphite, des mousses métalliques ou une combinaison de ces substances.

18. Procédé de climatisation d'un bâtiment avec au moins un élément de façade selon l'une quelconque des revendications 1 à 17, dans lequel un fluide de travail s'écoule au travers de l'élément de façade et ensuite vers le bâtiment afin d'échanger de la chaleur/du froid entre le boîtier et les modules d'accumulateur de chaleur latente (2) de l'élément de façade.

19. Procédé selon la revendication 18, dans lequel le fluide de travail est conduit du bâtiment à l'élément de façade.

20. Procédé selon la revendication 18, dans lequel le fluide de travail est conduit de l'extérieur du bâtiment dans l'élément de façade.

21. Procédé selon l'une des revendications 18 à 20, dans lequel si besoin l'élément de façade est relevé du bâtiment ou est replié sur le bâtiment.

22. Procédé selon l'une quelconque des revendications 18 à 21, dans lequel la position de l'élément de façade est réglée de sorte que le rayonnement solaire sur les modules d'accumulateur de chaleur latente (2) soit maximisé.

23. Procédé selon l'une quelconque des revendications 18 à 22, dans lequel un ou plusieurs des paramètres position du soleil, intensité du rayonnement solaire, vitesse du vent, température d'air extérieur, température d'air intérieur, température du matériau d'accumulateur de chaleur latente (26) sont déterminés et pris en compte pour la détermination de la position de l'élément de façade.

24. Procédé selon l'une quelconque des revendications 18 à 23, dans lequel l'élément de façade est relevé du bâtiment pendant la journée et/ou lorsque l'intensité du rayonnement solaire dépasse une valeur prédéterminée afin d'accumuler de l'énergie solaire dans le matériau d'accumulateur de chaleur latente (26) et est replié sur le bâtiment pendant la nuit et/ou lorsque l'intensité du rayonnement solaire n'atteint pas une valeur prédéterminée.

25. Procédé selon l'une quelconque des revendications 18 à 24, dans lequel le fluide de travail est de l'air et dans lequel le fluide de travail est tout d'abord guidé par l'élément de façade afin de recevoir de la chaleur des modules d'accumulateur de chaleur latente (2), et ensuite est amené à une distribution d'amenée d'air du bâtiment et/ou au moins un espace du bâtiment.

26. Procédé selon l'une quelconque des revendications 18 à 23, dans lequel l'élément de façade est relevé du bâtiment pendant la nuit et/ou lorsque la température d'air extérieur n'atteint pas une valeur prédéterminée afin d'émettre de l'énergie thermique stockée dans le matériau d'accumulateur de chaleur latente (26) par rayonnement et/ou convexion, et est replié sur le bâtiment pendant la journée et/ou lorsque la température d'air extérieur dépasse une valeur prédéterminée.

27. Procédé selon l'une quelconque des revendications 18 à 23 et 26, dans lequel le fluide de travail est de l'air et dans lequel le fluide de travail est tout d'abord retiré de la distribution d'évacuation d'air du bâtiment et/ou d'au moins un espace du bâtiment et ensuite est guidé au travers de l'élément de façade afin d'émettre de la chaleur aux modules d'accumulateur de chaleur latente (2).
